# EUROPÄISCHE PATENTSCHRIFT

(11) **EP 1 373 429 B1**
(45) Veröffentlichungstag und Bekanntmachung des Hinweises auf die Patenterteilung: **06.07.2011**
(21) Anmeldenummer: 02724197.5
(22) Anmeldetag: 05.03.2002
(51) Int. Cl.: C09K 3/10, C08G 18/67, C08F 290/14, F16B 13/14, C04B 40/06

(54) **MEHRKOMPONENTENKITS UND KOMBINATIONEN, IHRE VERWENDUNG UND ERHÄLTLICHE KUNSTMÖRTEL**
MULTI-COMPONENT KITS AND COMBINATIONS, USE THEREOF AND PLASTIC CEMENTS OBTAINED THEREFROM
KITS A PLUSIEURS COMPOSANTS ET COMBINAISONS, LEUR UTILISATION ET MORTIERS SYNTHETIQUES POUVANT ETRE OBTENUS AVEC CEUX-CI

(30) Priorität: 29.03.2001 DE 10115591
(43) Veröffentlichungstag der Anmeldung: 02.01.2004
(73) Patentinhaber: fischerwerke GmbH & Co. KG, 72178 Waldachtal (DE)
(72) Erfinder: VOGEL, Martin, 79286 Glottertal (DE); SCHÄTZLE, Joachim, 79341 Kenzingen (DE); GRÜN, Jürgen, 79268 Bötzingen (DE); SCHMIDT, Clemens, 79211 Denzlingen (DE)
(86) Internationale Anmeldenummer: PCT/EP2002/002383
(87) Internationale Veröffentlichungsnummer: WO 2002/079341

(56) Entgegenhaltungen:
- EP-A- 0 432 087
- EP-A- 0 591 803
- DE-A- 3 941 441
- DE-A- 4 304 824
- US-A- 5 369 176

## Beschreibung

### Zusammenfassung der Erfindung

Die Erfindung betrifft Mehrkomponenten-Kits, umfassend mindestens zwei Komponenten, welche jeweils komplementäre Vorstufen von härtbaren Reaktionsharzen beinhalten; die Verwendung von entsprechenden Kombinationen komplementärer Vorstufen am gewünschten Einsatzort, insbesondere in Form dieser Kits, zur Herstellung von Kunstmörteln; erhältliche Kunstmörtel; sowie Verfahren, welche die Verwendung dieser Kits in der Befestigungstechnik umfassen, jeweils wie in den Ansprüchen und nachfolgend beschrieben.

### Hintergrund der Erfindung

Bekannt sind nicht weiter härtbare Harze aus Hydroxylestern der Methacrylsäure und Polyisocyanat (US 5,369,176); nicht weiter härtbare Zweikomponentensysteme aus Isocyanaten und Hydroxylverbindungen (DE 3 9 41 441); Reaktionsharze in Zweikammerkartuschen (DE 43 04 824); und Patronen mit zwei Kammern mit bereits fertig gestellten Harzen und einem Härter als zweiter Komponente (EP 0 591 803). Bekannt sind auch Zweikomponenten-Klebepatronen in der Befestigungstechnik, insbesondere zur Befestigung von Ankern in Bohrlöchern, bei denen beispielsweise ein Harz (Binder) und ein Härter in einer äußeren und einer inneren Kammer, z.B. einer äußeren Ampulle mit dem Harz und einer darin eingeschlossenen Ampulle mit dem Härter, kombiniert sind. Bei mechanischer Zerstörung der Ampullen im Bohrloch durch Eintreiben eines Ankers werden Härter und Harz miteinander vermengt und die Aushärtung in Gang gesetzt, die zu gehärteten Kunstmörteln führt. Ein Beispiel ist in der DE 22 22 013 gezeigt. Bekannt sind auch Mörtelmassen zur Befestigung von Verankerungsmitteln in festen Aufnahmewerkstoffen, die durch einen Gehalt an radikalisch härtbaren, fertig vorgegebenen Vinylesterurethanharzen als härtbaren Reaktionsharzen gekennzeichnet sind (EP 0 432 087). Die Vinylesterurethanharze dienen der Verbesserung der Festigkeitseigenschaften der resultierenden Mörtelmassen. Auch hier werden Zwei-Kammerpatronen erwähnt. Wünschenswert wäre, neue Verfahren und Kits zur Verfügung zu stellen, welche weiter verbesserte Adhäsionseigenschaften vor allem bei Verwendung feuchter oder nasser Untergründe, verbesserte Tieftemperaturhärtung und verbesserte Nachhärtung ermöglichen. Wegen der Vorgabe der fertige härtbare Reaktionsharze enthaltenden Harze ist deren Struktur fest vorgegeben und kann nicht in Anpassung an spezielle Bedingungen, wie Bohrlochfeuchtigkeit, variiert werden.

### Allgemeine Beschreibung der Erfindung

Überraschend wurde nun gefunden, dass es vorteilhaft ist, die härtbaren Reaktionsharze erst durch Reaktion einander komplementärer Ausgangsverbindungen am gewünschten Einsatzort, z.B. vor oder in Löchern, vor allem Bohrlöchern, in denen Verankerungen befestigt werden sollen, entstehen zu lassen, wobei weitere Komponenten, insbesondere mit einem Gehalt an Härter, im wesentlichen gleichzeitig zugemischt werden, um so Kunstmörtel herzustellen, die vorteilhafte Eigenschaften haben, beispielsweise hohe Verbundspannungen ermöglichen. Die Vorteile gegenüber aus dem Stand der Technik bekannten Systemen, bei denen die härtbare Komponente in bereits fertiger Form eingesetzt wird, wie oben genannt, können, ohne dass durch diese Erklärung andere mögliche Erklärungen ausgeschlossen werden sollen, möglicherweise damit erklärt und veranschaulicht werden, dass der Einsatz der komplementären Ausgangskomponenten zu einer besseren Benetzung und damit zu einem besonders kontinuierlichen Übergang zwischen dem resultierenden Kunstmörtel und seiner Umgebung, beispielsweise dem Wandmaterial eines Bohrloches, führt. Die Kombination und Reaktion der Komponenten direkt am Einsatzort führt so zu einer besonders festen Verbindung des Kunstharzes mit dem umgebenden Material. Auch kann durch Variation bei der Auswahl der komplementären Ausgangskomponenten eine optimale Anpassung an die jeweils vorhandenen Bedingungen ermöglicht werden. Zu den weiteren Vorteilen gehören verbesserte Adhäsion, insbesondere auch im feuchten Bohrloch oder auf organischen Substraten, gute Nachhärtung, gute Härtung auch bei tiefer Temperatur und/ oder sehr gute Alkalibeständigkeit.

Besonders vorteilhafte Eigenschaften ergeben sich, wenn bei der Herstellung von Kunstmörteln einander komplementäre Ausgangskomponenten für härtbare Urethane oder insbesondere für aus dem Stand der Technik nicht bekannte härtbare Harnstoffe (insbesondere Vinylesterharnstoffe) am gewünschten Einsatzort unter Zumischen einer oder mehrerer weiterer Komponenten, wie Härter, Verwendung finden.

Besonders vorteilhaft ist bei allen vorgenannten Varianten, dass die Komponenten an der Befestigungsstelle, insbesondere in einem Loch, z.B. Bohrloch, miteinander umgesetzt werden können, und so, durch Variation der für die Reaktionsharze, insbesondere Urethan- und oder Harnstoffderivate verwendeten komplementären Ausgangskomponenten, ein hohes Mass an Flexibilität erreicht werden kann, bei dem jeweils für einen bestimmten Zweck besonders geeignete Komponenten miteinander kombiniert werden können.

### Detaillierte Beschreibung der Erfindung

Die Erfindung betrifft Mehrkomponenten-Kits, umfassend mindestens zwei getrennte Komponenten (a) und (b), welche jeweils komplementäre Vorstufen von härtbaren Reaktionsharzen umfassen, wie in Anspruch 1 beschrieben.

Hierbei sind die komplementären Vorstufen in besonders bevorzugten Ausführungsformen der Erfindung vorzugsweise solche zur Herstellung von durch einen Gehalt an härtbaren Urethan- und/oder Harnstoffderivaten, insbesondere den letzteren, gekennzeichneten Reaktionsharzen, das heißt, ausgewählt aus im Falle der Komponente (a)
für die Herstellung von Urethanderivaten einer oder mehreren Ausgangsverbindungen, die eine (bevorzugt) oder mehrere (dann insbesondere zwei) Hydroxy- oder Mercaptogruppen tragen und/oder für die Herstellung von Harnstoffderivaten einer oder mehreren Ausgangsverbindungen, eine (bevorzugt) oder mehrere Gruppen ausgewählt aus primären und sekundären Aminogruppen tragen, für die Herstellung von gemischten Harnstoff/Urethanderivaten einer oder mehreren Ausgangsverbindungen mit einer oder mehreren Hydroxy- und/ oder Mercaptogruppen und einer oder mehreren primären und/oder sekundären Aminogruppen; wobei zusätzlich einer oder mehrere - jeweils di- oder höherfunktionale - Alkohole, Amine oder Aminoalkohole, ferner Thio-alkohole, Thiole und/oder Aminothiole; vorliegen können; und
im Falle der Komponente (b)
einem oder mehreren Monc-, Di- (bevorzugt) oder Polyisocyanaten, oder Gemischen davon;
wobei mindestens die unter (a) genannten, Gruppen ausgewählt aus Hydroxy-, Mercapto-, primäre Amino- und/oder sekundäre Aminogruppen tragenden Ausgangsverbindungen (bevorzugt), oder die unter (b) genannten Isocyanate, insbesondere die Monoisocyanate, oder ferner beide, härtbar sind; und wobei eine dritte von den beiden Komponenten (a) und (b) räumlich getrennte Komponente (c), welche einen Härter umfasst, zusätzlich vorliegt (wobei Härter alternativ oder ergänzend auch in erforderlichenfalls geschützter Form in Komponente (a) und/oder (b) vorliegen kann); und gewünschtenfalls weitere Zusätze und/oder Reaktanden in den genannten und/ oder, falls vorhanden und gewünscht, in weiteren Komponenten vorliegen können.

Die Erfindung betrifft auch die Verwendung gemäß Anspruch 8 von Kombinationen einander komplementärer Ausgangsprodukte für härtbare Reaktionsharze zur Herstellung von Kunstmörteln am gewünschten Einsatzort, z.B. vor oder in Löchern, wie Bohrlöchern, in denen Verankerungen befestigt werden sollen, insbesondere die Verwendung der erwähnten Mehrkomponenten-Kits zur Herstellung von Kunstmörteln; damit erhältliche Kunstmörtel; sowie Verfahren, welche die Verwendung dieser Kombinationen, insbesondere Kits, in der Befestigungstechnik umfassen.

### Verzeichnis der Abbildungen:

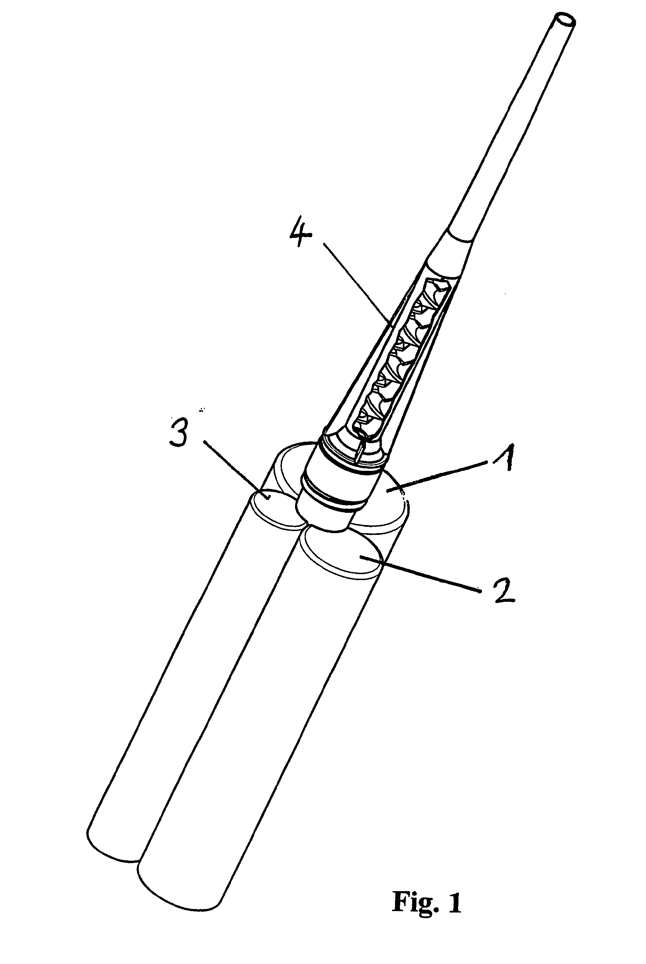

Fig. 1 zeigt eine Dreikammer-Kartusche als Beispiel für ein Mehrkomponenten-Kit. Kammer (1) umfasst Komponente (a), Kammer (2) umfasst Komponente (b) und Kammer (3) einen Härter. (4) Statikmischer (in teilweise aufgebrochener Darstellung).

### Bevorzugte Definitionen

Die im Rahmen der vorliegenden Offenbarung verwendeten allgemeinen Ausdrücke und Symbole haben vorzugsweise die nachstehend genannten Bedeutungen, wobei vor- und nachstehend die spezifischeren Bedeutungen an Stelle der allgemeineren Symbole und Definitionen eingesetzt werden können, was bevorzugte Erfindungsausführungen beschreibt:

Gewichtsprozent (Gew.-%)-Angaben, die auf die jeweilige Komponente Bezug nehmen, beziehen sich auf die Masse der jeweiligen Komponente, wenn nicht anders angegeben. Bei Bezugnahmen auf den fertigen Kunstmörtel beziehen sich diese Angaben auf das Gemisch aller seiner Komponenten.

"Ferner" bedeutet "in einer breiteren, insbesondere weniger bevorzugten Ausführungsform der Erfindung". "Jeweils" bedeutet, dass das nach "jeweils" genannte Attribut (z.B. ein Adjektiv) für alle in einer sich dann anschließenden Aufzählung genannten Glieder bis hin zu und einschließlich denjenigen, die durch "und", "oder" oder "und/oder" von dem vorhergehenden abgetrennt sind, gilt, also nicht nur für das erste Glied der jeweiligen Aufzählung.

"Umfassend" (= "beinhaltend") bedeutet insbesondere, dass noch weitere außer den jeweils spezifisch genannten Komponenten, Reaktanden, Zusätzen etc. vorliegen können. Vorzugsweise kann statt "umfassend" oder "beinhaltend" "enthaltend" eingesetzt werden, was bedeutet, dass dann nur die jeweils genannten Komponenten, Reaktanden, Zusätze etc. vorliegen und keine weiteren.

"Getrennt" bedeutet insbesondere, dass die entsprechenden Komponenten räumlich getrennt vorliegen, das heisst, so miteinander kombiniert sind, dass sie sich nicht von selbst miteinander vermischen können.

Halogen steht insbesondere für Fluor, Chlor, Brom oder Iod.

Das Präfix "Nieder" bedeutet, dass der betreffende Rest vorzugsweise bis zu 7, insbesondere bis zu 4 Kohlenstoffatome aufweist.

Unter einem Mehrkomponenten-Kit, umfassend mindestens zwei (räumlich) getrennte Komponenten (a) und (b), wie oben und unten definiert, ist ein solches zu verstehen, welches zwei oder mehr separate, miteinander verbundene und/oder ineinander verschachtelte Behältnisse umfasst, deren eines die Komponente (a), das andere die Komponente (b) beinhaltet, wobei auch eine dritte Komponente (c) vorliegt, die einen Härter beinhaltet, und gewünschtenfalls weitere Behältnisse mit weiteren Reaktanden oder Zusätzen. Darunter ist insbesondere eine Ausrüstung zu verstehen, die es ermöglicht, die Komponenten (a) und (b) sowie anschließend oder vorzugsweise gleichzeitig (c) sowie gewünschtenfalls weitere Reaktanden und Zusätze zur Herstellung eines wie vor- und nachstehend beschrieben erhältlichen Mörtels am gewünschten Einsatzort, beispielsweise direkt vor oder in einem Loch, vor allem Bohrloch, so zu vermischen und erforderlichenfalls einzubringen, dass dort die Bildung von aus den Komponenten (a) und (b) erhältlichen komplementären Ausgangs-, insbesondere Harnstoff- und/ oder Urethanverbindungen, zu den entsprechenden Reaktionsharzen und die Aushärtung erfolgen kann. Hierbei kann es sich um getrennte, aber beispielsweise als Set, etwa in einer gemeinsamen Verpackung oder einem gemeinsamen Gebinde, angebotene Behältnisse für das Harz, den Initiator oder gegebenenfalls weitere Zusätze handeln, beispielsweise getrennte Flaschen, Ampullen, Tuben oder Kartuschen für die einzusetzenden Komponenten, oder vorzugsweise um Drei- oder ferner Mehrkammerkartuschen (mit koaxial ineinander oder (z.B. parallel nebeneinander angeordneten) miteinander verbundenen Behältnissen mit Kammern zur Aufnahme der jeweiligen Komponenten) oder Drei- oder ferner Mehrkammerpatronen aus Glas (bevorzugt), aus Folien oder aus Kunststoff, oder Kombinationen von zwei oder mehr derartigen Behältnissen, ferner (insbesondere im Falle von Kartuschen) in Kombination mit Auspressgeräten, wie Ausdrückpistolen, und/oder Statikmischern oder Düsen/Kanülen zum Auspressen und/ oder ferner Behältnissen zum Mischen, wie Schüsseln oder Bechern, handeln. Ein Beispiel für eine bevorzugte Ausführungsform zeigt schematisch Fig. 1. Insbesondere im Falle von Patronen kann deren Wandmaterial, z.B. Glas, als weiterer Füllstoff nach dem Setz- oder Füllvorgang Bestandteil der resultierenden Kunstmörtel sein.

Härtbare Reaktionsharze sind ferner solche, die durch Reaktion von aus zwei oder mehr Komponenten, insbesondere zwei Komponenten (a) und (b) (und gegebenenfalls weiteren Zusätzen oder Reaktanden) bestehenden komplementären Vorstufen, erhältlich sind, von denen mindestens eine härtbare Komponenten umfasst, nämlich Epoxidharze, die jeweils härtbare (z.B. olefinische) Komponenten enthalten.

Als Ausgangsverbindungen kommen insbesondere folgende in Betracht:
- Für Epoxidharze kommen in erster Linie als Komponente (a) zwei oder mehr Hydroxygruppen tragende Ausgangsverbindungen, vorzugsweise wie unten für di- oder höherfunktionale Alkohole definiert, insbesondere die nicht härtbaren, wie unten definiert, oder Doppelbindungen, wie Vinylgruppen, tragende Analoge davon in Frage; als Komponente (b) Epichlorhydrin oder Analoge von Epichlorhydrin, insbesondere solche mit härtbaren Gruppen, wie Vinylresten, in Frage, wobei mindestens eine der Komponenten (a) und (b) härtbare Gruppen trägt.

"Komplementäre Vorstufen" bedeutet, dass durch chemische Umsetzung der einander komplementierenden Vorstufen Moleküle erhältlich sind, beispielsweise durch Addition oder Kondensation, die Bestandteile der Moleküle der vorstufen beinhalten, insbesondere die bei den Komponenten (a) und (b) vor- und nachstehend genannten Ausgangsverbindungen.

Die bevorzugten, für die Herstellung von Urethanderivaten verwendbaren härtbaren Ausgangsverbindungen in Komponente (a), die eine (bevorzugt) oder mehrere Hydroxy- oder Mercaptogruppen tragen, sind insbesondere solche, die neben einer oder mehreren Hydroxygruppen eine oder mehrere Doppelbindungen enthalten, welche polymerisierbar (d.h., härtbar) sind, insbesondere die Ester, ferner Thioester oder Amide, von Vinylgruppen oder substituierte Vinylgruppen tragenden Säuren, welche die Hydroxygruppe(n) am Rest der zum Ester, dem Thioester oder dem Amid beitragenden Alkohol-, Thiol- oder Aminokomponente tragen.

Die besonders bevorzugten, für die Herstellung von Harnstoffderivaten vorzugsweise verwendbaren härtbaren Ausgangsverbindungen in Komponente (a), die eine (bevorzugt) oder mehrere primäre und/oder (vorzugsweise) sekundäre Amino gruppen tragen, sind insbesondere solche, die neben einer oder mehreren primären und/oder sekundären Aminogruppen eine oder mehrere Doppelbindungen enthalten, welche polymerisierbar (= härtbar) sind, insbesondere die Ester, ferner Thioester oder Amide, von Vinylgruppen oder substituierte Vinylgruppen tragenden Säuren, welche die primäre(n) und/oder sekundäre(n) Aminogruppe(n) am Rest der zum Ester, dem Thioester oder dem Amid beitragenden Alkohol-, Thiol- oder Aminokomponente tragen. Eine Komponente (a) mit eine oder mehrere sekundäre Aminogruppen tragenden härtbaren Ausgangsverbindungen ist besonders bevorzugt.

Die für die Herstellung von gemischten Harnstoff/Urethanderivaten vorzugsweise verwendbaren härtbaren Ausgangsverbindungen mit einer oder mehreren Hydroxy- und/oder Mercaptogruppen und einer oder mehreren primären und/oder sekundären Aminogruppen sind vor allem solche, die neben einer oder mehreren Hydroxy- und/oder Mercaptogruppen und einer oder mehreren primären und/oder sekundären Aminogruppen eine oder mehrere Doppelbindungen enthalten, welche polymerisierbar (d.h., härtbar) sind, insbesondere die Ester, ferner Thioester oder Amide, von Vinylgruppen oder substituierte Vinylgruppen tragenden Säuren, welche die Hydroxy- und/oder Mercaptogruppen und sekundäre(n) Aminogruppe(n) am Rest der zum Ester, dem Thioester oder dem Amid beitragenden Alkohol-, Thiol- oder Aminokomponente tragen.

Bevorzugte härtbare Ausgangsverbindungen sind Verbindungen der Formel (A) 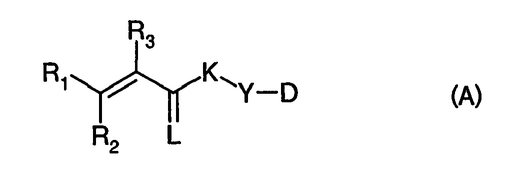 worin
R₁, R₂ und R₃ unabhängig voneinander Wasserstoff oder Niederalkyl, insbesondere Wasserstoff oder Methyl, bedeuten; oder R₃ Cyano bedeutet und R₁ und R₂ die zuletzt genannten Bedeutungen haben (dann vor allem anionische Polymerisation);
K und L unabhängig voneinander für Sauerstoff oder ferner für Schwefel oder für NL* stehen, worin L* Wasserstoff oder einen Rest ausgewählt aus Alkyl, insbesondere Niederalkyl, Cycloalkyl, Cycloalkylalkyl, Aryl und Arylniederalkyl bedeutet, welche unsubstituiert oder substituiert sind;
Y für unsubstituiertes oder substituiertes Alkylen, unsubstituiertes oder substituiertes Cycloalkylen, Arylen, Heteroarylen, Heteroalkylen oder einen unsubstituierten oder substituierten gemischt aliphatisch/aromatischen, aliphatisch/alicyclischen oder aliphatisch/heterocyclischen divalenten Rest steht;
oder K und Y gemeinsam oder K allein ein über Stickstoff gebundenes divalentes Heterocyclyl bedeuten; und
D für zur Herstellung von Urethanderivaten für Hydroxy oder Mercapto, und/oder zur Herstellung von Harnstoffderivaten (die bevorzugt sind) für primäres oder insbesondere sekundäres Amino steht;
oder D und Y gemeinsam oder D, Y und K gemeinsam einen über Stickstoff gebundenen N-haltigen Heterocyclylrest mit zusätzlich zum bindenden Stickstoff in Form einer freien Iminogruppe (-NH-) im Ring vorliegendem Stickstoff als sekundärem Amino bedeuten (für Harnstoffderivate).

Primäres Amino ist -NH₂. Eine sekundäre Aminogruppe ist eine substituierte Aminogruppe, welche im ungeladenen Zustand noch einen N-gebundenen Wasserstoff trägt; als N-Substituent kommt Alkyl, Cycloalkyl, Cycloalkylalkyl, Aryl, Arylalkyl, Heteroaryl oder Heteroarylalkyl in Betracht, welche jeweils substituiert oder vorzugsweise unsubstituiert sein können. Eine sekundäre Aminogruppe kann auch eine Iminogruppe sein, die Bestandteil eines N-haltigen Heterocyclylrests ist, wie im letzten Absatz erwähnt. Besonders bevorzugt als sekundäre Aminogruppe ist eine solche der Formel (B),

-N(-R)H (B)

worin R für Alkyl, insbesondere Niederalkyl, in erster Linie αverzweigtes Niederalkyl, vor allem Isopropyl, Isobutyl, sec-Butyl, tert-Butyl, für Cycloalkyl, wie Cylopropyl, Cyclobutyl, Cyclopentyl oder Cyclohexyl, für Cycloalkyl-alkyl, insbesondere für Cyclohexylmethyl, für Aryl, insbesondere für Phenyl, oder für Arylniederalkyl, insbesondere Phenylniederalkyl, wie Benzyl, steht, insbesondere für Niederalkyl.

Mercapto tragende Verbindungen sind insbesondere Verbindungen wie die oben genannten primäres Amino und/oder sekundäres Amino tragenden Verbindungen, worin anstelle einer oder mehrerer der freien oder sekundären Aminogruppen je eine Mercaptogruppe vorliegt.

Sofern es sich um nicht härtbare zwei oder mehr Hydroxy-, Mercapto-, primäre Amino- und/oder sekundäre Aminogruppen (insbesondere der Formel B, wie oben definiert) tragende Ausgangsverbindungen handelt, sind diese insbesondere ausgewählt aus zwei oder mehr unabhängig aus den genannten Gruppen ausgewählte Reste tragenden organischen Verbindungen. Die zwei oder mehr dieser Gruppen tragenden Verbindungen sind insbesondere aliphatische (erhöhen die Flexibilität), cycloaliphatische oder aromatische (dienen der Kettenversteifung) Di- oder Poly-, vor allem Di-, Tri- oder Tetra-(GR) tragende Verbindungen, insbesondere Di-(GR)-Hexan, -1,4-butan, -1,5-2-methylpentan, -1,8-octan, -1,12-dodecan, -4,4'-dicyclohexylmethan, -Isophoron, - 2,4- oder -2,6-(1-Methylcyclohexan), oder vor allem Aryl-di- oder Aryl-poly(GR), insbesondere Di-(GR)-Toluol, -diphenylmethan, 2,4,4'-tri-(GR)-diphenylmethan, Xylylol-1,3- oder -1,4-di-(GR), wobei (GR) jeweils für Amino, sekundäres Amino oder Mercapto steht, insbesondere für primäres oder vorzugsweise sekundäres Amino.

Di- oder höherfunktionale Alkohole, Thiole, Amine, Thioalkohole, Aminoalkohole oder Aminothiole sind insbesondere die unten bei der Definition von Präpolymeren erwähnten jeweils di- oder höherfunktionalen Alkohole oder Aminoalkohole oder deren Thioanaloge; oder die dort definierten di- oder höherfunktionalen Amine. Hydroxy-tragende Verbindungen sind generell gegenüber mercaptogruppentragenden Ausgangsverbindungen, wie auch di- oder höherfunktionale Alkohole gegenüber entsprechenden Thioalkoholen, Thiolen, Aminothiolen oder auch entsprechenden Aminoalkoholen sowie gegenüber Aminoaminen bevorzugt. Das Attribut "jeweils di- oder höherfunktional" betrifft dabei alle danach genannten Verbindungen bis hin zu und einschließlich derjenigen, die durch "und", "oder" oder "und/oder" von der vorhergehenden abgetrennt ist, also nicht nur das erste Glied der jeweiligen Aufzählung.

Diese vorzugsweise bivalenten, aber u.U. zur Erhöhung der Vernetzung auch tri- oder polyvalenten Verbindungen dienen nach dem Mischen der Komponenten (a) und (b) und gegebenenfalls weiterer Komponenten, Reaktanden und Zusätze zur Umsetzung mit den Diisocyanaten unter Bildung von Präpolymeren, deren Kettenabbruch dann durch eine härtbare, eine sekundäre Aminogruppe und/oder ferner eine Hydroxy- oder Mercaptogruppe enthaltende Ausgangsverbindung, vorzugsweise wie als bevorzugt definiert, erfolgt.

Sowohl in Komponente (a) als auch in Komponente (b) oder auch weiteren Komponenten (ausser der Härterkomponente) kann auch ein Gehalt an bereits vorgeformten Reaktionsharzen, insbesondere härtbaren Urethan- und/oder Harnstoffderivaten, vorliegen.

Unter einer Komponente sind vorzugsweise solche Zusammensetzungen zu verstehen, welche die oben oder vorzugsweise unten beschriebenen Zusammensetzungen für Komponenten (a), (b) oder (c) haben und ferner einen oder mehrere weitere Reaktanden und/ oder Zusätze, im Falle der Komponenten (a) und (b) oder weiterer Komponenten, wenn diese (i) härtbare Ausgangsverbindungen enthalten können, außer Initiatoren, die jedoch auch zugegen sein können, wenn sie beispielsweise in (mikro)verkapselter Form zugegen sind; (ii) wenn sie Hydroxy, Thio, Amino oder sekundäres Amino tragende Verbindungen enthalten, Isocyanaten, und (iii) wenn sie Isocyanate enthalten, ausser Hydroxy, Thio, Amino oder sekundäres Amino tragenden Verbindungen. Von den Zusätzen sind Reaktivverdünner, Füllstoffe, Beschleuniger und Inhibitoren bevorzugt, die inbesondere in den unten als bevorzugt genannten Mengen zugesetzt sind.

Di- oder Polyisocyanate sind insbesondere aliphatische (erhöhen die Flexibilität), cycloaliphatische oder aromatische Di- oder poly-, vor allem Di-, Tri- oder Tetra-isocyanate (dienen der Kettenversteifung), insbesondere Hexandiisocyanat, Dimethylendiisocyanat, 1,4-Diisocyanoatobutan, 1,5-Diisocyanato-2-methylpentan, 1,8-Diisocyanatooctan, 1,12-Diisocyanatododecan, 4,4'-Diisocyanatodicyclohexylmethan, Isophorondiisocyanat, 1-Methylcyclohexan-2,4- oder -2,6-diisocyanat, 3-Isocyanatomethyl-3,5,5-trimethylcyclohexylisocyanat, oder vor allem Aryl-di- oder Aryl-polyisocyanate, insbesondere Toluoldiisocyanat, z.B. Toluol-2,4- oder -2-6-diisocyanat, Diisocyanatodiphenylmethan, insbesondere 4,4'-Methylen-bis(phenylisocyanat) (MDI), 4,4'-Isopropyliden-diphenylisocyanat, 2,4,4'-triisocyanato-diphenylmethan, Xylylol-1,3- oder -1,4-diisocyanat; oder Rohpolyisocyanate, herstellbar z.B. durch Anilin/ Formaldehyd-Kondensation und anschließende Phosgenierung (vgl. Ullmann, Verlag Chemie, 4. Auflage, Band 19, S. 303-305); oder Präpolymere mit zwei oder mehr Isocyanatogruppen; oder Gemische von zwei oder mehr der genannten Di- oder Polyisocyanate. Besonders bevorzugt sind Diisocyanate oder ferner (zur verstärkten Vernetzung als sternförmige Moleküle) Triisocyanate.

Die zuletzt genannten Präpolymere mit zwei oder mehr Isocyanatogruppen sind insbesondere solche, die durch Reaktion ausgehend von Di- oder Polyisocyanaten, insbesondere den im letzten Absatz genannten außer den Präpolymeren selbst, mit jeweils di- oder höherfunktionalen Alkoholen (Di- oder Polyolen), Aminen oder Aminoalkoholen, oder Gemischen von zwei oder mehr davon, entstehen. Di- oder höherfunktionale Alkohole sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder -1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxy-cyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Tetrachlorphthalsäure oder Hexachlor-endomethylen-tetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-). Aminoalkohole sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder -O-Niederalkylen-NH-), wie Ethanolamin, Diethanolamin oder 3-Aminopropanol, oder aromatische Aminole, wie 2-, 3- oder 4-Aminophenol. Di- oder höherfunktionale Amine sind organische Aminoverbindungen mit 2 oder mehr Aminogruppen, insbesondere Hydrazin, N,N'-Dimethylhydrazin, aliphatische Di- oder polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, Benzidin, o-Chlorbenzidin, 2,5-p-Dichlorphenylendiamin, 3,3'-Dichlor-4,4'-diamino-diphenylmethan oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind. Es können auch Mischungen von zwei oder mehr der genannten jeweils di- oder höherfunktionalen Alkohole, ferner Aminoalkohole oder Amine vorliegen. In einer breiteren Ausführungsform der Erfindung können anstelle der jeweils di- oder höherfunktionalen Alkohole oder Aminoalkohole auch deren Thioanaloge vorliegen, in denen eine oder mehrere bis alle der Hydroxy- oder Aminogruppen als Mercaptogruppen vorliegen. Doch sind die Hydroxyverbindungen (weniger oxidationsgefährdet und ohne Mercaptangeruch) bervorzugt. Besonders bevorzugt sind Diole oder Triole, ferner Aminoalkohole, Diaminoalkohole, Aminodiole, Diamine oder Triamine, insbesondere die spezifisch genannten. Die Diole, Aminoalkohole und Diamine sind besonders bevorzugt, ihnen können ferner (als sternförmige Moleküle) Triole, Diaminoalkohole, Aminodiole oder Triamine beigefügt sein.

Die Bildung (Herstellung) der Präpolymeren kann gleichzeitig mit der Umsetzung zu den erfindungsgemässen härtbaren Harnstoffderivaten nach Mischung mindestens der Komponenten (a) und (b) und, sofern nicht bereits in (a) umfasst, der jeweils di- oder höherfunktionalen Alkohole, Aminoalkohole oder Amine oder deren Thioanaloger am Anwendungsort oder ferner vor dieser Umsetzung separat erfolgen. Vorzugsweise werden keine Präpolymeren eingesetzt, oder wenn, dann lediglich im Falle der ausschließlichen Verwendung von härtbaren Harnstoffderivaten als komplementären Vorstufen.

Bei vorheriger Herstellung ist darauf zu achten, dass aufgrund der Molverhältnisse endständig noch zwei oder mehr Isocyanatogruppen vorliegen können, beispielsweise durch Einsatz der jeweils di- oder höherfunktionalen Alkohole, Aminoalkohole und/oder Amine im Unterschuss gegenüber den Di- oder Polyisocyanaten. Auch bei gleichzeitiger Reaktion werden die Molverhältnisse der Reaktionskomponenten vorzugsweise so gewählt, dass nicht zu viele der radikalisch, anionisch oder kationisch härtbaren Ausgangsverbindungen, wie für Komponente (a) definiert, anwesend sind, da diese sonst einen frühen Kettenabbruch für die Präpolymeren bewirken. Vorzugsweise wird die Summe der reaktiven Wasserstoffe gleich oder kleiner als die Summe der Isocyanatogruppen gewählt.

Ein härtbares Mono- oder Polyisocyanat ist insbesondere eine Verbindung, die eine oder mehrere, inbesondere eine, Isocyanatogruppen trägt, die an einen Rest gebunden ist, der eine oder mehrere Doppelbindungen enthält, welche polymerisierbar sind. Solche Verbindungen sind insbesondere die Ester, ferner Thioester oder Amide, von Vinylgruppen oder substituierte Vinylgruppen tragenden Säuren, welche die Isocyanatogruppe(n) am Rest der zum Ester, dem Thioester oder dem Amid beitragenden Alkohol-, Thiol- oder Amin-Komponente tragen. Die Isocyanate von Estern, Thioestern oder Amiden Vinylgruppen tragender Säuren sind insbesondere solche der Formel (A*), 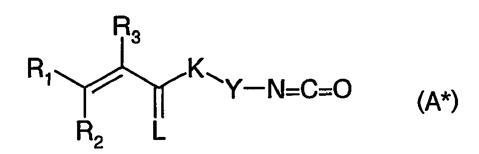 worin R₁, R₂ und R₃ unabhängig voneinander Wasserstoff oder Niederalkyl, insbesondere Wasserstoff oder Methyl, bedeuten, oder R₃ Cyano bedeutet und R₁ und R₂ die zuletzt genannten Bedeutungen haben (dann vor allem anionische Polymerisation);
K und L unabhängig voneinander für Sauerstoff oder ferner für Schwefel oder für NL* stehen, worin L* Wasserstoff oder einen Rest ausgewählt aus Alkyl, insbesondere Niederalkyl, Cycloalkyl, Cycloalkylalkyl, Aryl und Arylniederalkyl bedeutet, welche unsubstituiert oder substituiert sind; und
Y für unsubstituiertes oder substituiertes Alkylen, unsubstituiertes oder substituiertes Cycloalkylen, Arylen, Heteroarylen, Heteroalkylen oder einen unsubstituierten oder substituierten gemischt aliphatisch/aromatischen, aliphatisch/alicyclischen oder aliphatisch/heterocyclischen divalenten Rest steht;
oder K und Y gemeinsam oder K alleine ein über Stickstoff gebundenes divalentes Heterocyclyl bedeuten. Beispiele für die Herstellung und bevorzugte derartige Verbindungen finden sich in EP 0 315 876, welche hier insbesondere diesbezüglich durch Bezugnahmen inkorporiert wird. Bevorzugtes Beispiel ist Isocyanatoethylmethacrylat.

Vorzugsweise werden diese als Komponente (b) eingesetzt, wenn Komponente (a) nicht härtbare zwei oder mehr Hydroxy- , Mercapto-, primäre Amino- und/oder sekundären Aminogruppen tragende Ausgangsverbindungen umfasst.

Unsubstituiertes oder substituiertes Alkylen ist vorzugsweise C₁-C₂₀-Alkylen, insbesondere Niederalkylen, welches unsubstituiert oder durch einen oder mehrere, insbesondere bis zu drei, unabhängig voneinander vorzugsweise aus Halogen, wie Fluor, Chlor, Brom oder Iod, Niederalkyl, wie Methyl oder Ethyl, Phenyl, Phenylniederalkyl, Niederalkoxy, Phenyloxy, Phenylniederalkoxy, Niederalkoxycarbonyl, Phenyloxycarbonyl, Phenylniederalkoxycarbonyl, Nitro und Cyano ausgewählte Substituenten substituiert ist. Bevorzugt sind Ethylen oder 1,3-Propylen.

Unsubstituiertes oder substituiertes Cycloalkylen ist vorzugsweise C₃-C₁₂-, insbesondere C₄-C₈-Cycloalkylen, insbesondere Cyclopentanylen, Cyclohexanylen oder Cycloheptanylen, welches unsubstituiert oder durch einen oder mehrere, insbesondere bis zu drei, der als Substituenten für substituiertes Alkylen genannten Substituenten substituiert ist.

Arylen ist insbesondere das divalente Radikal eines mono- bis pentacyclischen aromatischen Rests mit 6 bis 30, vorzugsweise mit 6 bis 25 Kohlenstoffatomen, welcher unsubstituiert oder substituiert ist, vorzugsweise wie für substiuiertes Alkylen beschrieben, und ist insbesondere Phenylen, durch Niederalkyl substituiertes Phenylen, wie Methylphenylen, das divalente (vorzugsweise 4,4'-) Radikal von Diphenylmethan, Diphenylniederalkyl-methan, Diphenyl-diniederalkyl-methan, Diphenyl-(mono- oder polyhalogenoniederalkyl)-methan oder Diphenyl- bis(mono- oder polyhalogenoniederalkyl)-methan, insbesondere das divalente (vorzugsweise 4,4'-) Radikal von Diphenylmethan, 1,1-Diphenylethan, 2,2-Diphenyl-propan oder 2,2-Diphenyl-1,1,1,3,3,3-trifluorpropan; das divalente, über die beiden Phenylsubstituenten gebundene Radikal von 1,1-Dimethyl-3-methyl-3-(4-phenyl)-5-indan oder das divalente, über die beiden Phenylsubstituenten gebundene Radikal von 9,9-di-(4-phenyl)-fluoren.

Heteroarylen ist vorzugsweise das divalente Radikal eines mindestens einen Heterocyclus enthaltenden mono- bis pentacyclischen Reste mit einem oder mehreren Ringheteroatomen, inbesondere 1 bis 3 Ringheteroatomen ausgewählt aus N, S und O, welcher unsubstituiert oder substituiert ist, vorzugsweise wie für substituiertes Alkylen beschrieben, und ist beispielsweise Piperidinylen, Piperazinylen, Pyridin-2,6-ylen, 2-Methylpyridin-2,4-ylen, Phenazin-2,3-ylen, das über die Phenylsubstituenten gebundene divalente Radikal von 2,5-di(4-phenyl)-1,3,4-oxadiazol oder -thiadiazol.

Heteroalkyl ist verzweigtes oder insbesondere lineares Alkyl mit bis zu 100, vorzugsweise mit bis zu 20 Kettenatomen, von denen eines oder mehrere Heteroatome, insbesondere N, S oder O sein können, die übrigen sind Kohlenstoffatome. Beispiele sind Polyoxyethylen- oder -propylenreste oder Polythioethylen- oder propylenreste.

In einem unsubstituierten oder substituierten gemischt aliphatisch/aromatischen, aliphatisch/alicyclischen oder aliphatisch/heterocyclischen das divalente Radikal von divalenten Rest ist der aliphatische Teil vorzugsweise ein Alkylenrest wie oben definiert, insbesondere Methylen, während der aromatische Teil vorzugsweise wie Arylen, der alicyclische Teil vorzugsweise wie Cycloalkylen und der heterocyclische Teil vorzugsweise wie Heteroarylen definiert ist.

Alkyl ist insbesondere C₁-C₂₄-, insbesondere C₁-C₁₂-, vor allem Niederalkyl, welches ein- oder mehrfach verzweigt oder unverzweigt (linear) ist, und unsubstituiert oder durch einen oder mehrere, insbesondere bis zu drei, der als Substituenten für substituiertes Alkylen genannten Substituenten substituiert ist. Bevorzugt sind Methyl, Ethyl, n- oder Iso-propyl, oder n-, Iso- oder tert-Butyl.

Cycloalkyl ist vorzugsweise C₃-C₁₂-, insbesondere C₄-C₈-Cycloalkyl, insbesondere Cyclopropyl, Cyclobutyl, Cyclopentyl, Cyclohexyl oder Cycloheptyl, welches unsubstituiert oder durch einen oder mehrere, insbesondere bis zu drei, der als Substituenten für substituiertes Alkylen genannten Substituenten substituiert ist.

Cycloalkylalkyl ist vorzugsweise C₄-C₁₆-, insbesondere C₄-C₈-Cycloalkylalkyl, insbesondere Cyclopropylmethyl, Cyclobutylmethyl, Cyclopentylmethyl, Cyclohexylmethyl oder Cycloheptylmethyl, und ist unsubstituiert oder durch einen oder mehrere, insbesondere bis zu drei, der als Substituenten für substituiertes Alkylen genannten Substituenten substituiert.

Aryl ist ein mono- bis pentacyclischer aromatischer Rest mit 6 bis 30, vorzugsweise mit 6 bis 25, insbesondere mit 6 bis 14 Kohlenstoffatomen, welcher unsubstituiert oder substituiert ist, vorzugsweise wie für substituiertes Alkylen beschrieben, und ist insbesondere Phenyl oder Naphthyl.

Arylalkyl hat vorzugsweise 7 bis 37, insbesondere 7 bis 16 Kohlenstoffatome, mit Aryl und Alkyl wie vorstehend definiert, und ist unsubstituiert oder durch einen oder mehrere, insbesondere bis zu drei, der als Substituenten für substituiertes Alkylen genannten Substituenten substituiert.

Heteroaryl ist ein mindestens einen Heterocyclus enthaltender mono- bis pentacyclischer Rest mit einem oder mehreren Ringheteroatomen, inbesondere 1 bis 3 Ringheteroatomen ausgewählt aus N, S und O, welcher unsubstituiert oder substituiert ist, vorzugsweise wie für substituiertes Alkylen beschrieben, und ist beispielsweise Pyrrolyl, Thiazolyl, Oxazolyl oder Pyridyl.

In Heteroarylalkyl ist Heteroaryl unsubstituiert oder substituiert und vorzugsweise wie zuletzt definiert und über einen unverzweigten oder verzweigten Alkylenrest, wie für Alkylen definiert, vorzugsweise endständig, insbesondere an Methylen, gebunden.

Ein N-haltiger Heterocyclylrest ist insbesondere ein mono- bis penta-, vorzugsweise mono-, bi- oder tricyclischer Heterocyclylrest mit 4 bis 20, vorzugsweise 5 bis 14 Ringatomen, mit ein oder mehreren, vorzugsweise bis zu drei, Ringheteroatomen, vorzugsweise ausgewählt aus N, O und S, der unsubstituiert oder substituiert durch einen oder mehrere, vorzugsweise bis zu drei, Substituenten, insbesondere unabhängig voneinander ausgewählt aus Halogen, wie Fluor, Chlor, Brom oder Iod, Niederalkyl, wie Methyl oder Ethyl, Phenyl, Phenylniederalkyl, Niederalkoxy, Phenyloxy, Phenylniederalkoxy, Niederalkoxycarbonyl, Phenyloxycarbonyl, Phenylniederalkoxycarbonyl, Nitro und Cyano vorliegt, vorzugsweise ein ungesättigter Heterocyclylrest, beispielsweise Piperidino, Piperazino, Morpholino, Thiomorpholino oder dergleichen. (Beispielsweise über Stickstoff gebundenes) divalentes Heterocyclyl ist vorzugsweise entsprechendes Heterocyclylen. Vorzugsweise handelt es sich um Heterocyclylen mit mindestens einem oder vorzugsweise zwei Ringstickstoffatomen, insbesondere die oben jeweils unter diese Definition fallenden spezifisch genannten Reste.

Zu den weiteren Reaktanden zählen insbesondere Reaktivverdünner (Comonomere), mit denen bei der Härtung die neuen auf Harnstoffderivatbasis vorliegenden Bestandteile anstelle der oder parallel zur Reaktion mit sich selbst reagieren können. Als Reaktivverdünner können alle hierfür geeigneten olefinisch ungesättigten Verbindungen, insbesondere vinylgruppen(einschließlich methacryl- oder acrylgruppen-)haltige Verbindungen, beispielsweise Styrol, Divinylbenzol, Mono-, Di- und Triacrylate oder -methacrylate, wie Methacrylsäuremethylester, Methacrylsäure-isopropylester, Methacrylsäureisobutylester, Hexandioldiacrylat, Tetraethylenglykoldiacrylat, 2-Hydroxypropylmethacrylat (2-HPMA), Butandioldimethacrylat (BDDMA), Ethylenglykoldimethacrylat (EGDMA), Trimethylolpropantrimethacrylat oder tert-Butylaminoethylmethacrylat oder Vinylacetat; ferner Alkylmethycrylate (z.B. C₁₀-C₂₀-Alkyl, Edukte für "Kammpolymere") oder Polyoxyethylen-Methacrylate, - acrylate, -4-styrylalkyl(insbesondere -methyl-)ester, - vinylether oder -fumarate, p-n-Alkyl-styrol, n-Alkylvinylether, N-(n-Alkyl)maleimid, N-Vinylpyrrolidon, N-Vinylcarbazol, N,N-Dimethyl-cyanofumarat, α-Methylstyrol, Inden oder Furan; oder dergleichen, oder Mischungen davon Verwendung finden. Diese liegen vorzugsweise je Komponente (vor allem (a) und (b)), ausser der Härterkomponente (z.B. (c)), sofern diese nicht in geeigneter Weise geschützter, beispielsweise mikroverkapselter, Form in einem Gewichtsanteil von bis zu 90 Gew.-%, insbesondere 1 bis 80 Gewichtsprozent (Gew.-%), vor allem von 5 bis 40 Gew.-%, vor, bezogen auf die jeweilige Komponente.

Die Komponenten, insbesondere (a) oder (b), oder beide, können vorbeschleunigt sein mit z.B. für kalthärtende Ungesättigte Polyester (UP) üblichen Vorbeschleunigern, insbesondere mit tertiären aromatischen Aminen oder Schwermetallsalzen. Von den tertiären aromatischen Aminen sind insbesondere N,N-Diniederalkyl- oder N,N-Di-(hydroxyniederalkyl)-aniline, -toluidine oder - xylidine, insbesondere N,N-Dimethyl- oder N,N-Diethylanilin, N,N-Dimethyl- oder N,N-Diethyl-toluidine oder -xylidine, wie N,N-Dimethyl-p-toluidin, N,N-Diisopropylinden-p-toluidin oder N,N-Bis(hydroxyethyl)-xylidin, als Schwermetallsalze beispielsweise Carbonsäuresalze von Übergangsmetallen, wie Kobaltoctanoat, Kobaltnaphthenat oder organische Vanadiumsalze möglich.

Zur Inhibierung können den vorbeschleunigten Komponenten, insbesondere denjenigen mit härtbare Gruppen umfassenden Ausgangsverbindungen, Inhibitoren, insbesondere Chinone, sterisch gehinderte Chinone, Hydrochinone, wie Methyl-, Dimethyl- oder Trimethylchinone, oder Phenole, wie 4,4'-bis(2,6-di-tert-butylphenol), 1,3,5-trimethyl-2,4,6-tris(3,5-di-tert-butyl-4-hydroxybenzyl)-benzol oder p-Methoxyphenol oder Phenothiazine, oder dergleichen, zugesetzt sein. Die Beschleuniger liegen vorzugsweise in der jeweiligen Komponente in einer Menge von bis zu 8 Gew.-%, insbesondere zwischen 0,01 und 5, vor allem zwischen 0,05 und 2 Gew.-% vor. Die Inhibitoren liegen vorzugsweise in der betreffenden Komponente in einer Menge von bis zu 2 Gew.-%, insbesondere zwischen 0,001 und 0,1 Gew.-%, vor.

Als weitere Zusätze kommen insbesondere Füllstoffe zum Einsatz, vorzugsweise mineralische oder mineralähnliche Füllstoffe, wie Quarz, Glas, Porzellan, Korund, Keramik, Talkum, Kieselsäure (z.B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Tonerd- oder Portlandzement), Metalle, wie Aluminium, Ruß, ferner Holz, mineralische oder organische Fasern, oder dergleichen, oder Gemische von zwei oder mehr davon. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform, und die entsprechenden Grundteilchen haben vorzugsweise einen maximalen Durchmesser von 0,001 bis 10 mm. Füllstoffe liegen in der jeweiligen Komponente vorzugsweise in einer Menge von bis zu 90, insbesondere 3 bis 85, vor allem 5 bis 70 Gew.-% vor.

Weitere denkbare Zusätze sind ferner Thixotropierungsmittel, z.B. pyrogene Kieselsäure, Farbstoffe oder Pigmente, Weichmacher, wie Phthalsäure- oder Sebacinsäureester, Stabilisatoren, Antistatikmittel, Verdickungsmittel oder dergleichen, welche insgesamt vorzugsweise, bezogen auf den fertigen Kunstmörtel, in einer Menge von bis zu 15, vorzugsweise zwischen 0,01 und 5 Gew.-%, vorliegen. Auch Lösungsmittel können, vorzugsweise in einer Menge bis zu 30 Gew.-%, bezogen auf den fertigen Kunstmörtel, beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser.

"Härtbar" bedeutet durch anionische, kationische oder in erster Linie radikalische Polymerisation, vorzugsweise eingeleitet durch Initiatoren, aber auch ohne spezifische Zugabe von Initiatoren, beispielsweise durch Hydroxyionen aus Luftfeuchtigkeit, polymerisierbar.

Als Initiator für die Härtung der Harze finden im Falle der radikalischen Polymerisation radikalbildende Verbindungen Verwendung, in erster Linie organische Peroxide, wie Diacylperoxide, z.B. Diacetylperoxid, Benzoyl- oder Bis(4-chlorobenzoyl)peroxid, Ketonperoxide, wie Methylethylketonperoxid oder Cyclohexanonperoxid, oder Alkylperester, wie tert-Butylperbenzoat, Verwendung, oder ferner Azoinitiatoren, wie Azonitrile, z.B. Azobisisobutyronitril oder 2,2'-Azobis(2,4-dimethylvaleronitril, Azoester, wie Dimethyl-2,2'-azobisisobutyrat, Azoamide, wie 2,2'-Azobis[2-methyl-N-(2-hydroxyethyl)propionamid], Azoalkane, wie 2,2'-Azobis(2-methyl-propan), Azoamidine, wie 2,2'-Azobis(2-methylpropionamidin)-dihydrochlorid, oder Azoimidazoline, wie 2,2'-Azobis[2-(2-imidazolin-2-yl)propan[-dihydrochlorid, oder Persulfate oder Perborate, sowie Mischungen davon, in Frage. Die Initiatoren können in reiner Form, beispielsweise tert-Butylperbenzoat, oder vorzugsweise phlegmatisiert, z.B. mit Gips, Kreide, pyrogener Kieselsäure, Phthalaten, wie insbesondere Dicyclohexylphthalat, Chlorparaffin oder dergleichen, und gewünschtenfalls versetzt mit einem Füllstoff, insbesondere wie oben genannt, und/oder (insbesondere zur Herstellung einer Paste oder einer Emulsion) einem Lösungsmittel, insbesondere Wasser; wobei vorzugsweise der Initiator in einer Menge von 1 bis 80, vorzugsweise 30 bis 70 Gew.-% und das Phlegmatisierungsmittel in einer Menge von 1 bis 80, vorzugsweise 20 bis 70 Gew.-%, jeweils bezogen auf die Gesamtmenge an Härter; Füllstoffe in einer Menge von 0 bis 50, vorzugsweise von 0 bis 20, beispielsweise von 5 bis 20 %; und/oder Lösungsmittel in einer Menge von 0 bis 60, vorzugsweise von 20 bis 50 % vorliegen, und die Härter als Pulver (bevorzugt), Paste oder Emulsion eingesetzt werden.

Als Initiatoren für anionische Polymerisation (beispielsweise bei α-Cyanoacrylaten verwendbar) dienen z.B. Metallalkyle, Alkoholate, Metallamide oder Metallhydroxide, z.B. Natriumamid. Als Initiatoren für die kationische Polymersation, beispielsweise im Falle von Vinylethern, eignen sich Lewis-Säuren, wie Borfluorid, Aluminiumchlorid, Titan(IV)-chlorid oder Zinn(IV)-chlorid. Die radikalische Polymerisation ist bevorzugt.

Der Begriff "Härter" (insbesondere als Komponente (c)) beinhaltet vor- und nachstehend reine Initiatoren oder phlegmatisierte Initiatoren mit oder ohne Füllstoffzusatz und/oder Lösungsmittelzusatz, mit anderen Worten, die komplette Härterkomponente.

Der Härter kann in der nicht härtbaren Komponente (insbesondere der Isocyanatkomponente) und/oder (insbesondere in geschützter Form, d.h. z.B. in mikroverkapselter Form), auch in der härtbaren Komponente eingearbeitet sein.

Die Menge an Härter, bezogen auf die Masse aller Komponenten zusammengenommen, liegt im Bereich von 0,1 bis 30, vorzugsweise von 0,5 bis 25 Gew.-%.

Ein bevorzugtes Mehrkomponenten-Kit gemäß der Erfindung enthält drei Komponenten, nämlich Komponente (a), wie oben beschrieben, insbesondere mit mehreren oder insbesondere einer härtbaren Ausgangsverbindung(en), die mehrere oder vorzugsweise eine sekundäre Aminogruppe tragen bzw. trägt, und gegebenenfalls weiteren Zusätzen, insbesondere Reaktivverdünnern, Füllstoffen und/oder jeweils di- oder höherfunktionalen Alkoholen, Aminen oder Aminoalkoholen; Komponente (b) mit nicht härtbaren Di- oder ferner Polyisocyanaten, insbesondere einem Di-Isocyanat, und gegebenenfalls weiteren Zusätzen, wie Reaktivverdünnern, Füllstoffen, Beschleunigern und Inhibitoren; und Komponente (c) als Härter, insbesondere mit einem oder mehreren Initiatoren und Phlegmatisierungsmitteln und gewünschtenfalls Füllstoffen. Vorzugsweise macht die Masse der an der Bildung des Kunstharzes zu beteiligenden Anteile der Komponente (a) 5 bis 90, vorzugsweise 20 bis 80 Gew.-%, der Komponente (b) 5 bis 90, vorzugsweise 20 bis 80, und der Komponente (c) (Härter) 0,1 bis 30, vorzugsweise von 0,5 bis 25 Gew.-% bezogen auf die gesamte Masse der gemischten Komponenten (fertiger Kunstmörtel) aus. Falls weitere Komponenten vorliegen, können diese jeweils vorzugsweise bis zu 30, beispielsweise 5 bis 25 Gew.-% bezogen auf die gesamte Masse der gemischten oder zu mischenden Komponenten ausmachen.

Die Erfindung betrifft auch die Verwendung der Mehrkomponenten-Kits zur Herstellung von Kunstmörteln; sowie Verfahren, welche die Verwendung dieser Kits oder von Kombinationen entsprechender komplementärer Vorstufen am gewünschten Einsatzort in der Befestigungstechnik umfassen.

Die Verwendung eines erfindungsgemäßen Mehrkomponenten-Kits oder die Verwendung einer Kombination von entsprechenden komplementären Vorstufen am gewünschten Einsatzort erfolgt durch Mischen der zugehörigen Komponenten, insbesondere der Komponenten (a), (b) und (c), vorzugsweise der vor- und nachstehend als bevorzugt genannten, am gewünschten Einsatzort, insbesondere direkt vor einem Loch oder innerhalb eines Loches, z.B. einem Bohrloch. Das Mischen kann ausserhalb des Loches, beispielsweise in einem Gefäß, z.B. einer Schüssel, oder vorzugsweise einem Statikmischer an einer Mehrkammer-, insbesondere Dreikammer-Kartusche, oder innerhalb desselben erfolgen, z.B. bei Verwendung von Mehrkammerpatronen, insbesondere Dreikammerpatronen. Man erhält einen Kunstmörtel mit den vorliegend beschriebenen vorteilhaften Eigenschaften.

Unter einem Kunstmörtel ist insbesondere ein solcher am gewünschten Einsatzort, vorzugsweise in einem Bohrloch, ausgehend von den erfindungsgemäßen Komponenten, insbesondere (a), (b) und (c), vor allem den als bevorzugt genannten; insbesondere durch die im letzten Absatz beschriebene Verwendung eines erfindungsgemäßen Mehrkomponenten-Kits; erhältlicher Kunstmörtel zu verstehen.

Unter Befestigung ist insbesondere eine Befestigung mit Hilfe von Verankerungsmitteln aus Metall (z.B. Hinterschneidanker, Gewindestangen oder Bohranker) der einem anderen Material, wie Kunststoff oder Holz, in festen Aufnahmewerkstoffen, insbesondere, soweit sie Bestandteile von künstlich errichteten Bauwerken sind, vor allem Mauerwerk, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen.

Die Einbringung und Mischung (Verwendung) erfolgt im Falle von patronen vorzugsweise gemeinsam mit dem Verankerungsmittel, insbesondere einem der im letzten Absatz beschriebenen, im Falle der Verwendung von separaten Behältnissen oder vor allem von Ausdrückpistolen mit Kartuschen, bei denen die Komponenten in einem Statikmischer vermischt werden, insbesondere direkt vor dem Einbringen des Verankerungsmittels. Zur Erläuterung: Mit der Mischung und Einbringung der Komponenten, insbesondere (a) und (b) und (c), auf oder in die gewünschten Stellen, an denen Verankerungsmittel befestigt werden sollen, insbesondere Löcher, wie Bohrlöcher, beginnen mehrere, im wesentlichen parallel und/oder nur mit geringer zeitlicher Versetzung ablaufende Reaktionen, insbesondere die Bildung des Reaktionsharzes, aber beispielsweise auch Reaktionen der besagten Mischung oder einzelner Bestandteile davon mit dem Material des Substrats für die Verankerung, z.B. mit dem Material der Wandung der Löcher, Durchdringung des Substratmaterials durch die besagte Mischung oder einzelner Bestandteile Präpolymerbildung und weitere Reaktionen. Die endgültige Aushärtung erfolgt in situ.

Neue Befestigungsverfahren, welche die Verwendung der erfindungsgemäßen Mehrkomponenten-Kits umfassen, sind insbesondere durch die in den vorstehenden beiden Absätzen genannten Verfahrensschritte gekennzeichnet. Die Befestigungsmittel, z.B. Anker, können beispielsweise durch Einschlagen, Drehen, Eindrücken oder Kombinationen davon eingebracht werden.

### Bevorzugte Ausführungsformen der Erfindung:

Bei den nachstehenden bevorzugten Ausführungsformen der Erfindung können anstelle allgemeiner Begriffe die vor- oder nachstehenden spezifischeren Definitionen eingesetzt werden, was besonders bevorzugte Ausführungsformen der Erfindung definiert.
(I) Bevorzugt sind vor und nachstehend solche Mehrkomponenten-Kits, deren Verwendung, die Verwendung von entsprechenden Kombinationen komplementärer Vorstufen am gewünschten Einsatzort und/oder jeweils damit erhältliche Kunstmörtel, bei denen die Komponente (a) entweder Ausgangsverbindungen für Urethanderivate umfasst, die eine oder ferner mehrere Hydroxygruppen tragen; oder Ausgangsverbindungen, die eine oder ferner mehrere primäre oder (vorzugsweise) sekundäre Aminogruppen tragen, während die Komponente (b) eines oder ferner mehrere Di- oder Polyisocyanate, oder Gemische davon, umfasst, während die übrigen Komponenten, Zusätze und Reaktanden jeweils wie beschrieben sind.
(II) Die Erfindung betrifft vorzugsweise ein Mehrkomponenten-Kit nach Anspruch 1, umfassend als die zwei getrennten Komponenten (a) und (b) solche, welche jeweils komplementäre Vorstufen von durch einen Gehalt an härtbaren Urethan- und/oder Harnstoffderivaten gekennzeichneten Harzen umfassen, wobei die komplementären Vorstufen ausgewählt sind aus im Falle der Komponente (a)
   für die Herstellung von Urethanderivaten einer oder mehreren härtbaren Ausgangsverbindungen, die eine (bevorzugt) oder mehrere Hydroxygruppen tragen und/oder für die Herstellung von Harnstoffderivaten einer oder mehreren härtbaren Ausgangsverbindungen, die eine (bevorzugt) oder mehrere primäre oder (vorzugsweise) sekundäre Aminogruppen tragen, für die Herstellung von gemischten Harnstoff/Urethanderivaten einer oder mehreren härtbaren Ausgangsverbindungen mit einer oder mehreren Hydroxy- und einer oder mehreren primären oder (vorzugsweise) sekundären Aminogruppen; wobei ferner zusätzlich einer oder mehrere jeweils di- oder höherfunktionale Alkohole, Aminoalkohole und/oder Amine vorliegen können; wobei die härtbaren Ausgangsverbindungen vorzugsweise solche der oben gezeigten Formel (A) sind, worin
   R₁, R₂ und R₃ unabhängig voneinander Wasserstoff oder Niederalkyl, insbesondere Wasserstoff oder Methyl, bedeuten; oder
   R₃ Cyano bedeutet und R₁ und R₂ die zuletzt genannten Bedeutungen haben (dann vor allem anionische Polymerisation);
   K und L unabhängig voneinander für Sauerstoff oder ferner für Schwefel oder für NL* stehen, worin L* Wasserstoff oder einen Rest ausgewählt aus Alkyl, insbesondere Niederalkyl, Cycloalkyl, Cycloalkylalkyl, Aryl und Arylniederalkyl bedeutet, welche unsubstituiert oder substituiert sind;
   Y für unsubstituiertes oder substituiertes Alkylen, unsubstituiertes oder substituiertes Cycloalkylen, Arylen, Heteroarylen, Heteroalkylen oder einen unsubstituierten oder substituierten gemischt aliphatisch/aromatischen, aliphatisch/alicyclischen oder aliphatisch/heterocyclischen divalenten Rest steht;
   oder K und Y gemeinsam oder K allein ein über Stickstoff gebundenes divalentes Heterocyclyl bedeuten; und
   D für zur Herstellung von Urethanderivaten für Hydroxy, und/oder zur Herstellung von Harnstoffderivaten (die bevorzugt sind) für primäres oder (vorzugsweise) sekundäres Amino steht, oder ferner für -NH₂;
   oder D und Y gemeinsam oder D, Y und K gemeinsam einen über Stickstoff gebundenen N-haltigen Heterocyclylrest mit zusätzlich zum bindenden Stickstoff in Form einer freien Iminogruppe (-NH-) im Ring vorliegendem Stickstoff als sekundärem Amino bedeuten (für Harnstoffderivate); wobei sekundäres Amino vorzugsweise eine Gruppe der oben gezeigten Formel B ist, worin
   R für Alkyl, insbesondere Niederalkyl, in erster Linie αverzweigtes Niederalkyl, vor allem Isopropyl, Isobutyl, sec-Butyl, tert-Butyl, für Cycloalkyl, wie Cylopropyl, Cyclobutyl, Cyclopentyl oder Cyclohexyl, für Cycloalkyl-alkyl, insbesondere für Cyclohexylmethyl, für Aryl, insbesondere für Phenyl, oder für Arylniederalkyl, insbesondere Phenylniederalkyl, wie Benzyl, steht, insbesondere für Niederalkyl; und
   im Falle der Komponente (b)
   einem oder mehreren Di- (bevorzugt) oder Polyisocyanaten, oder Gemischen davon;
   und wobei eine dritte von den beiden Komponenten (a) und (b) ebenfalls räumlich getrennte Komponente (c), welche einen Härter umfasst, zusätzlich vorliegt; und weitere Zusätze und/oder Reaktanden in den Komponenten vorliegen können, insbesondere in Komponente (a) Füllstoffe und/oder Reaktivverdünner, in Komponente (b) Füllstoffe, Reaktivverdünner, Beschleuniger und/oder Inhibitoren und in Komponente (c) Füllstoffe;
   dessen Verwendung, die Verwendung von entsprechenden Kombinationen komplementärer Vorstufen am gewünschten Einsatzort und/oder jeweils damit erhältliche Kunstmörtel.
(III) Stärker bevorzugt ist ein Mehrkomponenten-Kit, umfassend mindestens zwei getrennte Komponenten (a) und (b), welche jeweils komplementäre Vorstufen von durch einen Gehalt an härtbaren Urethan- und/oder Harnstoffderivaten gekennzeichneten Harzen umfassen, wobei die komplementären Vorstufen ausgewählt sind aus im Falle der
   Komponente (a) einer oder mehreren Verbindungen der oben gezeigten Formel (A), worin
   R₁, R₂ und R₃ unabhängig voneinander Wasserstoff oder Niederalkyl, insbesondere Wasserstoff oder Methyl, bedeuten;
   K und L für Sauerstoff stehen;
   Y für Niederalkylen steht; und D für -OH (für Urethanderivate) oder für -N(R)H steht, worin R für Niederalkyl, in erster Linie α-verzweigtes Niederalkyl, vor allem Isopropyl, Isobutyl, sec-Butyl,' tert-Butyl, steht; im Falle der Komponente (b) aus einem oder mehreren Di- und Polyisocyanaten, insbesondere aliphatischen, cycloaliphatischen oder aromatischen Di- oder Poly-, vor allem Di-, Tri- oder Tetra-isocyanaten;
   und wobei eine dritte von den beiden Komponenten (a) und (b) ebenfalls räumlich getrennte Komponente (c) mit einem Härter zusätzlich vorliegt; und weitere Zusätze und/oder Reaktanden in den Komponenten vorliegen können, insbesondere in Komponente (a) Füllstoffe (bezogen auf Komponente (a) vorzugsweise bis zu 90, insbesondere 3 bis 85, vor allem von 5 bis 70 Gew.-%) und/oder Reaktivverdünner (bezogen auf Komponente (a) vorzugsweise bis zu 90, insbesondere 1 bis 80, vor allem 5 bis 40 Gew.-%), in Komponente (b) Füllstoffe (bezogen auf Komponente (b) vorzugsweise bis zu 90, insbesondere 3 bis 85, vor allem von 5 bis 70 Gew.-%), Reaktivverdünner (bezogen auf Komponente (a) vorzugsweise bis zu 90, insbesondere 1 bis 80, vor allem 5 bis 40 Gew.-%), Beschleuniger (bezogen auf Komponente (b) vorzugsweise bis zu 5 Gew.-%, insbesondere zwischen 0,01 und 3, vor allem zwischen 0,05 und 2 Gew.-%) und/oder Inhibitoren (bezogen auf Komponente (b) vorzugsweise bis zu 2 Gew.-%, insbesondere zwischen 0,01 und 1 Gew.-%), und in Komponente (c) Füllstoffe (bezogen auf Komponente (c) vorzugsweise bis zu 90, insbesondere 3 bis 85, vor allem von 5 bis 65 Gew.-%); dessen Verwendung, die Verwendung von entsprechenden Kombinationen komplementärer Vorstufen am gewünschten Einsatzort und/oder jeweils damit erhältliche Kunstmörtel..
(IV) Vorzugsweise macht in den drei vorstehenden Absätzen die Masse der Anteile der Komponente (a) 5 bis 90, vorzugsweise 20 bis 80 Gew.-%, der Komponente (b) 5 bis 90, insbesondere 20 bis 80, und der Komponente (c) (Härter) 0,1 bis 30, insbesondere von 0,5 bis 25 Gew.-% bezogen auf die gesamte Masse der mischbaren Komponenten aus.
(V) Als Kunstmörtel ist insbesondere ein solcher bevorzugt, der nach der Mischung der Komponenten gemäß einem der letzten vier oder den nachfolgenden beiden Absätzen am gewünschten Einsatzort, insbesondere in einem Bohrloch, erhältlich ist, wobei gegebenenfalls noch Reste einer verwendeten Mehrkammerpatrone als weitere Füllstoffe beitragen.
(VI) Ein bevorzugtes Mehrkomponenten-Kit beinhaltet drei Komponenten (a), (b) und (c), wie zuvor oder nachstehend beschrieben, in einer Mehrkammerkartusche oder Mehrkammerpatrone, insbesondere in jeweils einer der drei Kammern einer Dreikammerkartusche oder einer Dreikammerpatrone.
(VII) Die Verwendung eines erfindungsgemäßen Mehrkomponenten-Kits oder einer Kombination entsprechender komplementärer Vorstufen erfolgt vorzugsweise durch Mischen der zugehörigen in den vorstehenden Absätzen (I) bis (IV) genannten Komponenten, insbesondere der Komponenten (a), (b) und (c), am gewünschten Einsatzort, insbesondere direkt vor einem Loch oder innerhalb eines Loches, z.B. einem Bohrloch. Das Mischen kann außerhalb des Loches, beispielsweise in einem Gefäß, z.B. einer Schüssel, oder vorzugsweise einem Statikmischer an einer Mehrkammer-, insbesondere Dreikammer-Kartusche, oder innerhalb desselben erfolgen, beispielsweise bei Verwendung von Patronen, insbesondere Dreikammerpatronen. Man erhält einen Kunstmörtel mit den oben oder unten beschriebenen vorteilhaften Eigenschaften.

Bevorzugt ist auch ein Verfahren zur Befestigung von Ankern in Löchern, welches die Verwendung eines Mehrkomponenten-Kits gemäß einem der Absätze (I) bis (IV) oder (VI) umfasst. Die Einbringung und Mischung erfolgt im Falle von Patronen vorzugsweise gemeinsam mit dem Verankerungsmittel im Falle der Verwendung von separaten Behältnissen oder vor allem von Ausdrückpistolen mit Kartuschen, bei denen die Komponenten in einem Statikmischer vermischt werden, insbesondere direkt vor dem Einbringen des Verankerungsmittels.

Die Erfindung betrifft insbesondere die in den Beispielen genannten Komponenten und Mehrkomponenten-Kits, die dort gezeigten Verwendungen und die gemäß den Beispielen erhältlichen Kunstmörtel.

Die Ausgangsmaterialien für die erfindungsgemässen Harze und Kunstmörtel, oder deren Vorstufen, sind bekannt, kommerziell erhältlich und/oder nach an sich bekannten Verfahren herstellbar.

### Beispiele

Die nachfolgenden Beispiele dienen der Illustration der Erfindung und bedeuten keine Einschränkung.

### Beispiel 1: Patrone M12 (z.B. zur Befestigung einer Gewindestange M12)

a) Die als härtbares sekundäres Amin tert-Butylaminoethylmethacrylat umfassende Komponente (a*), als Diisocyanat Diphenylmethandiisocyanat umfassende Komponente (b*) und als Initiator Dibenzyolperoxid umfassende Komponente (c*) werden getrennt in die Kammern (Komponente (b*) Außenglas (größte Ampulle), größeres Innenglas (Komponente (a*)) und Innenglas (kleinste Ampulle, Komponente (c*)) einer Patrone M12 verbracht.
Außenglas: Komponente (b*)

| | |
|---|---|
| Diphenylmethandiisocyanat 60 %-ig in BDDMA, vorbe-schleunigt und inhibiert mit Benzochinon | 3,4 g |

| | |
|---|---|
| Trockene Glasperlen (Körnung 150-200 µm) | 3,5 g |

Größeres Innenglas: Komponente (a*)

| | |
|---|---|
| tert-Butylaminoethylmethacrylat | 1,7 g |
| BDDMA | 0, 5 g |
| Quarzsand (Korngröße 1,2-1,8 mm) | 4,0 g |

Kleineres Innenglas: Komponente (c*)

| | |
|---|---|
| Dibenzoylperoxid 50 % in Dicyclohexylphthalat | 0,3 g |

b) Als Beispiel für die Verwendung wird die unter a) beschriebene Patrone wie folgt eingesetzt: Das Bohrloch wird gründlich gereinigt, mit der Patrone befüllt und die Gewindestange drehend und schlagend gesetzt.

### Beispiel 2: Injektionsmörtel für 3-Kammer-Kartusche

Eine Dreikammerkartusche, wie in Fig. 1 gezeigt, wird mit folgenden Komponenten gefüllt:
Komponente (a) (Kammer (1)):

| | |
|---|---|
| tert-Butylaminoethylmethacrylat | 55 g |
| Quarzsand | 36 g |
| Kieselsäure | 6 g |
| Diethylanilin | 2 g |
| Additive | 0,5 g |
| Hydrochinon | 0,5 g |

Komponente (b) (Kammer (2)):

| | |
|---|---|
| Diphenylmethandiisocyanat | 97 g |
| Kieselsäure | 3 g |

Komponente (c) (Kammer (3)):

| | |
|---|---|
| Dibenzoylperoxid | 20 g |
| Phlegmatisierungsmittel | 35 g |
| Gips | 40 g |
| Additive und Farbstoffe | 3 g |
| Kieselsäure | 2 9 |

Das Volumenverhältnis der Komponenten (b) ; (a) : (c) liegt bei 1 : 2,5 : 0,2.

Beispiel 3: 3-Komponentenpatrone (M12) Analog Beispiel 1 werden die beiden mit den jeweils unten angegebenen Komponenten gefüllten Innengläser 1 und 2 in dem ebenfalls wie unten gefüllten Außenglas eingeschlossen:
Außenglas (Komponente (b)):

| | |
|---|---|
| Diphenylmethandiisocyanat | 2,5 g |

Innenglas 1 (Komponente (a)):

| | |
|---|---|
| 2-Hydroxypropylmethacrylat | 1,43 g |
| DABCO (Air Products) | 0,03 g |
| Hydrochinon | 0,02 g |
| 1,4-Butandiolmethacrylat | 1,43 g |
| Dimethylanilin | 0,08 g |
| Korund (Korngröße 1-2 mm) | 8,1 g |

Innenglas 2 (Komponente (c)):

| | |
|---|---|
| Dibenzoylperoxid | 0,3 g |

## Patentansprüche

1. Mehrkomponenten-Kits, umfassend mindestens zwei getrennte Komponenten (a) und (b), welche jeweils komplementäre Vorstufen eines durch anionische, kationische oder radikalische Polymerisation härtbaren Reaktionsharzes, aus denen das härtbare Reaktionsharz durch Addition oder Kondensation erhältlich ist, umfassen, wobei die jeweils komplementären Vorstufen aus den für die für die Herstellung von jeweils härtbaren Urethanen und/oder, Harnstoffderivaten, oder von härtbaren Komponenten enthaltenden Epoxidharzen, benötigten ausgewählt sind., sowie eine dritte von den beiden Komponenten (a) und (b) ebenfalls räumlich getrennte Komponente (c), welche einen Härter umfasst, wobei im Falle der härtbaren Urethane und/oder Harnstoffderivate die komplementären Vorstufen ausgewählt sind aus im Falle der
Komponente (a)
für die Herstellung von Urethanderivaten einer oder mehreren Ausgangsverbindungen, die eine oder mehrere Hydroxy- oder Mercaptogruppen tragen und/oder für die Herstellung von Harnstoffderivaten einer oder mehreren Ausgangsverbindungen, die eine oder mehrere Gruppen ausgewählt aus primären und sekundären Aminogruppen tragen, für die Herstellung von gemischten Harnstoff/Urethanderivaten einer oder mehreren Ausgangsverbindungen mit einer oder mehreren Hydroxy- und/oder Mercaptogruppen und einer oder mehreren primären und/oder sekundären Aminogruppen; wobei zusätzlich einer oder mehrere - jeweils di- oder höherfunktionale - Alkohole, Amine, Aminoalkohole, Thio-alkohole, Thiole und/oder Aminothiole; vorliegen können; und im Falle der
Komponente (b)
einem oder mehreren Mono-, Di- oder Polyisocyanaten, oder Gemischen davon;
wobei mindestens die unter (a) genannten Hydroxy- oder Mercaptogruppen tragenden und/ oder sekundäre Aminogruppen tragenden Ausgangsverbindungen, oder die unter (b) genannten Isocyanate, oder beide, härtbar sind,
und wobei im Falle der Epoxidharze die drei Komponenten (a), (b) und (c) in jeweils einer der drei Kammern einer Dreikammerkartusche oder eine Dreikammerpatrone beinhaltet sind.

2. Mehrkomponenten-Kit gemäß Anspruch 1, wobei gewünschtenfalls weitere Zusätze und/oder Reaktanden in den genannten und/oder, falls vorhanden und gewünscht, in weiteren Komponenten vorliegen.

3. Mehrkomponenten-Kit gemäß Anspruch 1 oder 2, wobei die komplementären Vorstufen ausgewählt sind aus im Falle der
Komponente (a)
für die Herstellung von Urethanderivaten einer oder mehreren härtbaren Ausgangsverbindungen, die eine (bevorzugt) oder mehrere Hydroxygruppen tragen und/oder für die Herstellung von Harnstoffderivaten einer oder mehreren härtbaren Ausgangsverbindungen, die eine (bevorzugt) oder mehrere primäre oder (vorzugsweise) sekundäre Aminogruppen tragen, für die Herstellung von gemischten Harnstoff/Urethanderivaten einer oder mehreren härtbaren Ausgangsverbindungen mit einer oder mehreren Hydroxy- und einer oder mehreren primären oder (vorzugsweise) sekundären Aminogruppen; wobei ferner zusätzlich einer oder mehrere di- oder höherfunktionale Alkohole, Aminoalkohole und/oder Amine vorliegen können; wobei die härtbaren Ausgangsverbindungen vorzugsweise solche der Formel (A) 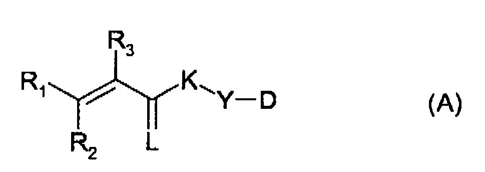 sind, worin
R₁, R₂ und R₃ unabhängig voneinander Wasserstoff oder Niederalkyl, insbesondere Wasserstoff oder Methyl, bedeuten; oder
R₃ Cyano bedeutet und R₁ und R₂ die zuletzt genannten Bedeutungen haben (dann vor allem anionische Polymerisation);
K und L unabhängig voneinander für Sauerstoff oder ferner für Schwefel oder für NL* stehen, worin L* Wasserstoff oder einen Rest ausgewählt aus Alkyl, insbesondere Niederalkyl, Cycloalkyl, Cycloalkylalkyl, Aryl und Arylniederalkyl bedeutet, welche unsubstituiert oder substituiert sind;
Y für unsubstituiertes oder substituiertes Alkylen, unsubstituiertes oder substituiertes Cycloalkylen, Arylen, Heteroarylen, Heteroalkylen oder einen unsubstituierten oder substituierten gemischt aliphatisch/aromatischen, aliphatisch/alicyclischen oder aliphatisch/heterocyclischen divalenten Rest steht;
oder K und Y gemeinsam oder K allein ein über Stickstoff gebundenes divalentes Heterocyclyl bedeuten; und
D für zur Herstellung von Urethanderivaten für Hydroxy, und/oder zur Herstellung von Harnstoffderivaten (die bevorzugt sind) für primäres oder (insbesondere) sekundäres Amino steht;
oder D und Y gemeinsam oder D, Y und K gemeinsam einen über Stickstoff gebundenen N-haltigen Heterocyclylrest mit zusätzlich zum bindenden Stickstoff in Form einer freien Iminogruppe (-NH-) im Ring vorliegendem Stickstoff als sekundärem Amino bedeuten (für Harnstoffderivate); wobei sekundäres Amino vorzugsweise eine Gruppe der Formel B
-N(-R)H (B)
ist, worin
R für Alkyl, insbesondere Niederalkyl, in erster Linie αverzweigtes Niederalkyl, vor allem Isopropyl, Isobutyl, sec-Butyl, tert-Butyl, für Cycloalkyl, wie Cylopropyl, Cyclobutyl, Cyclopentyl oder Cyclohexyl, für Cycloalkylalkyl, insbesondere für Cyclohexylmethyl, für Aryl, insbesondere für Phenyl, oder für Arylniederalkyl, insbesondere Phenylniederalkyl, wie Benzyl, steht, insbesondere für Niederalkyl; und im Falle der
Komponente (b)
einem oder mehreren Di- (bevorzugt) oder Polyisocyanaten, oder Gemischen davon;
und wobei vorzugsweise eine dritte von den beiden Komponenten (a) und (b) ebenfalls räumlich getrennte Komponente (c), welche einen Härter umfasst, zusätzlich vorliegt; und weitere Zusätze und/oder Reaktanden in den Komponenten vorliegen können, insbesondere in Komponente
(a) Füllstoffe und/oder Reaktivverdünner, in Komponente
(b) Füllstoffe, Reaktivverdünner, Beschleuniger und/oder Inhibitoren und in Komponente (c) Füllstoffe.

4. Mehrkomponenten-Kit gemäß einem der Ansprüche 1 bis 3, umfassend mindestens zwei getrennte Komponenten (a) und (b), welche jeweils komplementäre Vorstufen von durch einen Gehalt an härtbaren Urethan- und/oder Harnstoffderivaten **gekennzeichnet**en Harzen umfassen, wobei die komplementären Vorstufen ausgewählt sind aus im Falle der Komponente (a) einer oder mehreren Verbindungen der in Anspruch 3 gezeigten Formel (A), worin
R₁, R₂ und R₃ unabhängig voneinander Wasserstoff oder Niederalkyl, insbesondere Wasserstoff oder Methyl, bedeuten;
K und L für Sauerstoff stehen;
Y für Niederalkylen steht; und D für -OH (für Urethanderivate) oder für -N(R)H steht, worin R für Niederalkyl, in erster Linie α-verzweigtes Niederalkyl, vor allem Isopropyl, Isobutyl, sec-Butyl, tert-Butyl, steht, oder ferner für -NH₂; im Falle der
Komponente (b) aus einem oder mehreren Di- und Polyisocyanaten, insbesondere aliphatischer, cycloaliphatischen oder aromatischen Di- oder Poly-, vor allem Di-, Tri- oder Tetra-isocyanaten;
und wobei die dritte von den beiden Komponenten (a) und (b) ebenfalls räumlich getrennte Komponente (c) mit einem Härter zusätzlich vorliegt; und weitere Zusätze und/oder Reaktanden in den Komponenten vorliegen können, insbesondere in Komponente (a) Füllstoffe (bezogen auf Komponente (a) vorzugsweise bis zu 90 Gew.-%) und/oder Reaktivverdünner (bezogen auf Komponente (a) vorzugsweise bis zu 90 Gew.-%), in Komponente (b) Füllstoffe (bezogen auf Komponente (b) vorzugsweise bis zu 90 Gew.-%), Reaktivverdünner (bezogen auf Komponente (a) vorzugsweise bis zu 90 Gew.-%), Beschleuniger (bezogen auf Komponente (b) vorzugsweise bis zu 5 Gew.-%) und/oder Inhibitoren (bezogen auf Komponente (b) vorzugsweise bis zu 2 Gew.-%, und in Komponente (c) Füllstoffe (bezogen auf Komponente (c) vorzugsweise bis zu 90 Gew.-%).

5. Mehrkomponenten-Kit aus drei Komponenten gemäß einem der Ansprüche 1 bis 4, worin die Masse der Anteile der Komponente (a) 5 bis 90, vorzugsweise 20 bis 80 Gew.-%, der Komponente (b) 5 bis 90, insbesondere 20 bis 80, und der Komponente (c) (Härter) 0,1 bis 30, insbesondere von 0,5 bis 25 Gew.-% bezogen auf die gesamte Masse der mischbaren Komponenten ausmacht.

6. Mehrkomponenten-Kit gemäß einem der Ansprüche 1 bis 5, bei denen die Komponente (a) Ausgangsverbindungen für Urethanderivate umfasst, die eine oder ferner mehrere Hydroxygruppen tragen, während die Komponente (b) eines oder ferner mehrere Di- oder Polyisocyanate, oder Gemische davon, umfasst.

7. Kunstmörtel, erhältlich nach Mischung der Komponenten gemäß einem der Ansprüche 1 bis 6 am gewünschten Einsatzort.

8. Verwendung eines Mehrkomponenten-Kits gemäß einem der Ansprüche 1 bis 6 zur Herstellung von Kunstmörteln, umfassend das Mischen der zugehörigen Komponenten, insbesondere der Komponenten (a), (b) und (c), am gewünschten Einsatzort, insbesondere direkt vor einem Loch oder innerhalb eines Loches, in dem Verankerungsmittel befestigt werden sollen, z.B. einem Bohrloch.

9. Verfahren zur Befestigung von Ankern in Löchern, welches die Verwendung eines Mehrkomponenten-Kits gemäß einem der Ansprüche 1 bis 6 umfasst.

10. Verfahren nach Anspruch 9, wobei die Verwendung des Mehrkomponenten-Kits am gewünschten Einsatzort durch Mischung der Komponenten (a), (b) und (c) am gewünschten Einsatzort erfolgt und die Anker durch Einschlagen, Drehen, Eindrücken oder Kombinationen davon eingebracht werden.

## Claims

1. Multi-component kits comprising at least two separate components (a) and (b), which comprise mutually complementary precursors of a reactive resin curable by means of anionic, cationic or free-radical polymerisation, from which precursors the curable reactive resin is obtainable by addition or condensation, wherein the mutually complementary precursors are selected from those required for producing curable (in each case) urethanes and/or urea derivatives, or for producing epoxy resins comprising curable components, and also a third component (c), likewise spatially separated from the two components (a) and (b) and comprising a hardener, wherein in the case of the curable urethanes and/or urea derivatives the complementary precursors are selected,
in the case of component (a),
for producing urethane derivatives, from one or more starting compounds carrying one or more hydroxy or mercapto groups; and/or, for producing urea derivatives, from one or more starting compounds carrying one or more groups selected from primary and secondary amino groups; for producing mixed urea/urethane derivatives, from one or more starting compounds containing one or more hydroxy and/or mercapto groups and one or more primary and/or secondary amino groups; it being possible for one or more - in each case di- or higher functional - alcohols, amines, aminoalcohols, thioalcohols, thiols and/or aminothiols, to be additionally present; and,
in the case of component (b),
from one or more mono-, di- or poly-isocyanates, or mixtures thereof;
wherein at least the starting compounds mentioned under (a), carrying hydroxy or mercapto groups and/or carrying secondary amino groups, or the isocyanates mentioned under (b), or both, are curable,
and wherein, in the case of the epoxy resins, the three components (a), (b) and (c) are each contained in one of the three chambers of a three-chamber cartridge or three-chamber shell casing.

2. Multi-component kit according to claim 1, wherein, if desired, further additives and/or reactants are present in the mentioned components and/or, if present and desired, in further components.

3. Multi-component kit according to claim 1 or 2, wherein the complementary precursors are selected,
in the case of component (a),
for producing urethane derivatives, from one or more curable starting compounds carrying one (preferably) or more hydroxy groups; and/or, for producing urea derivatives, from one or more curable starting compounds carrying one (preferably) or more primary or (preferably) secondary amino groups; for producing mixed urea/urethane derivatives, from one or more curable starting compounds containing one or more hydroxy groups and one or more primary or (preferably) secondary amino groups; it being possible, furthermore, for one or more di- or higher functional alcohols, aminoalcohols and/or amines to be additionally present;
wherein the curable starting compounds are preferably compounds of formula (A) 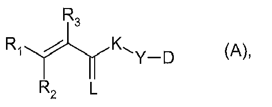 wherein
R₁, R₂ and R₃ denote, each independently of the others, hydrogen or lower alkyl, especially hydrogen or methyl; or
R₃ denotes cyano and R₁ and R₂ have the afore-mentioned meanings (leading to especially anionic polymerisation);
K and L denote, each independently of the other, oxygen or, furthermore, sulphur or denote NL* wherein L* is hydrogen or a radical selected from alkyl, especially lower alkyl, cycloalkyl, cycloalkylalkyl, aryl and aryl-lower alkyl, which are unsubstituted or substituted;
Y denotes unsubstituted or substituted alkylene, unsubstituted or substituted cycloalkylene, arylene, heteroarylene, heteroalkylene or an unsubstituted or substituted, mixed aliphatic/aromatic, aliphatic/alicyclic or aliphatic/heterocyclic bivalent radical;
or K and Y together or K alone denote(s) a bivalent heterocyclyl bonded by way of nitrogen; and
D denotes, for producing urethane derivatives, hydroxy and/or, for producing urea derivatives (which are preferred), primary or (especially) secondary amino;
or D and Y together, or D, Y and K together, denote an N-containing heterocyclyl radical bonded by way of nitrogen and containing, in addition to the bonding nitrogen, in the form of a free imino group (-NH-), nitrogen present in the ring as secondary amino (for urea derivatives); wherein secondary amino is preferably a group of formula B
-N(-R)H (B),
wherein
R denotes alkyl, especially lower alkyl, primarily α-branched lower alkyl, especially isopropyl, isobutyl, sec-butyl or tert-butyl, cycloalkyl, such as cyclopropyl, cyclobutyl, cyclopentyl or cyclohexyl, cycloalkylalkyl, especially cyclohexylmethyl, aryl, especially phenyl, or aryl-lower alkyl, especially phenyl-lower alkyl, such as benzyl, especially lower alkyl; and,
in the case of component (b),
from one or more di- (preferably) or poly-isocyanates, or mixtures thereof; and wherein preferably a third component (c), likewise spatially separated from the two components (a) and (b) and comprising a hardener, is additionally present; and wherein further additives and/or reactants may be present in the components, especially fillers and/or reactive diluents in component (a), fillers, reactive diluents, accelerators and/or inhibitors in component (b), and fillers in component (c).

4. Multi-component kit according to one of claims 1 to 3, comprising at least two separate components (a) and (b) which comprise mutually complementary precursors of resins **characterised by** a content of curable urethane and/or urea derivatives, wherein the complementary precursors are selected, in the case of component (a), from one or more compounds of formula (A) indicated in claim 3, wherein
R₁, R₂ and R₃ denote, each independently of the others, hydrogen or lower alkyl, especially hydrogen or methyl;
K and L denote oxygen;
Y denotes lower alkylene; and D denotes -OH (for urethane derivatives) or denotes -N(R)H wherein R denotes lower alkyl, primarily α-branched lower alkyl, especially isopropyl, isobutyl, sec-butyl or tert-butyl, or, furthermore, -NH₂; and,
in the case of component (b), from one or more di- and poly-isocyanates, especially aliphatic, cycloaliphatic or aromatic di- or poly-, more especially di-,
tri- or tetra-, isocyanates;
and wherein the third component (c), likewise spatially separated from the two components (a) and (b) and comprising a hardener, is additionally present; and wherein further additives and/or reactants may be present in the components, especially, in component (a), fillers (preferably up to 90 % by weight, based on component (a)) and/or reactive diluents (preferably up to 90 % by weight, based on component (a)); in component (b), fillers (preferably up to 90 % by weight, based on component (b)), reactive diluents (preferably up to 90 % by weight, based on component (a)), accelerators (preferably up to 5 % by weight, based on component (b)) and/or inhibitors (preferably up to 2 % by weight, based on component (b)), and, in component (c), fillers (preferably up to 90 % by weight, based on component (c)).

5. Multi-component kit comprising three components, according to one of claims 1 to 4, wherein the weight of the matter of component (a) is from 5 to 90 % by weight, preferably from 20 to 80 %, that of component (b) from 5 to 90 % by weight, especially from 20 to 80 % by weight, and that of component (c) (hardener) from 0.1 to 30 % by weight, especially from 0.5 to 25 % by weight, based on the total weight of the components to be mixed.

6. Multi-component kit according to one of claims 1 to 5, wherein component (a) comprises starting compounds for urethane derivatives carrying one or, furthermore, more hydroxy groups whereas component (b) comprises one or, furthermore, more di- or poly-isocyanates, or mixtures thereof.

7. Synthetic mortar obtainable after mixing the components according to one of claims 1 to 6 at the desired site of use.

8. Use of a multi-component kit according to one of claims 1 to 6 in producing synthetic mortars, comprising mixing the associated components, especially components (a), (b) and (c) at the desired site of use, especially directly in front of a hole or within a hole in which anchoring means are to be fastened, for example a drilled hole.

9. Method of fastening anchors in holes, which comprises the use of a multi-component kit according to one of claims 1 to 6.

10. Method according to claim 9, wherein the multi-component kit is used at the desired site of use by mixing components (a), (b) and (c) at the desired site of use and the anchors are introduced by hammering in, screwing, pressing in or combinations thereof.

## Revendications

1. Kits à plusieurs composants, comprenant au moins deux composants séparés (a) et (b), qui comprennent respectivement des précurseurs complémentaires d'une résine de réaction durcissable par polymérisation anionique, cationique ou radicalaire, à partir desquels la résine de réaction durcissable peut être obtenue par addition ou condensation, dans lesquels les précurseurs complémentaires respectifs sont sélectionnés parmi ceux nécessaires pour la fabrication d'uréthanes et/ou de dérivés d'urée respectifs durcissables ou de résines époxyde contenant des composants durcissables, ainsi qu'un troisième composant (c) également séparé spatialement des deux composants (a) et (b), qui comprend un durcisseur, où dans le cas des uréthanes et/ou des dérivés d'urée durcissables, les précurseurs complémentaires sont sélectionnés parmi, dans le cas du
composant (a)
pour la fabrication de dérivés d'uréthane un ou plusieurs composés de départ qui portent un ou plusieurs groupes hydroxy ou mercapto et/ou pour la fabrication de dérivés d'urée un ou plusieurs composés de départ qui portent un ou plusieurs groupes sélectionnés parmi des groupes amino primaires et secondaires, pour la fabrication de dérivés d'urée/uréthane mixtes un ou plusieurs composés de départ présentant un ou plusieurs groupes hydroxy et/ou mercapto et un ou plusieurs groupes amino primaires et/ou secondaires ; où en outre peuvent être présents un ou plusieurs alcools, amines, aminoalcools, thioalcools, thiols et/ou aminothiols, respectivement bifonctionnels ou de fonctionnalité supérieure ; et dans le cas du composant (b)
un ou plusieurs mono-, di- ou poly-isocyanates, ou mélanges de ceux-ci ;
où au moins les composés de départ cités sous (a), portant des groupes hydroxy ou mercapto et/ou portant des groupes amino secondaires, ou les isocyanates cités sous (b), ou les deux, sont durcissables,
et où dans le cas des résines époxydes, les trois composants (a), (b) et (c) sont - contenus dans respectivement une des trois chambres d'une cartouche à trois chambres ou d'un chargeur à trois chambres.

2. Kit à plusieurs composants selon la revendication 1, dans lequel si cela est souhaité d'autres additifs et/ou réactifs existent dans les composants cités et/ou, s'ils existent et si cela est souhaité, dans les autres composants.

3. Kit à plusieurs composants selon la revendication 1 ou 2, dans lequel les précurseurs complémentaires sont sélectionnés parmi, dans le cas du composant (a)
pour la fabrication de dérivés d'uréthane un ou plusieurs composés de départ durcissables, qui portent un (de préférence) ou plusieurs groupes hydroxy et/ou pour la fabrication de dérivés d'urée un ou de plusieurs composés de départ durcissables qui portent un (de préférence) ou plusieurs groupes amino primaires ou (de préférence) secondaires, pour la fabrication de dérivés d'urée/uréthane mixtes un ou plusieurs composés de départ durcissables ayant un ou plusieurs groupes hydroxy et un ou plusieurs groupes amino primaires ou (de préférence) secondaires ; où peuvent de plus exister en outre un ou plusieurs alcools, aminoalcools et/ou amines, bifonctionnels ou de fonctionnalité supérieure ; où les composés de départ durcissables sont de préférence de formule (A) 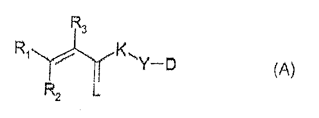 dans laquelle
R₁, R₂ et R₃ représentent, indépendamment les uns des autres, l'hydrogène ou un alkyle inférieur, en particulier l'hydrogène ou le méthyle; ou
R₃ représente un cyano et R₁ et R₂ ont les dernières significations données (ensuite surtout pour la polymérisation anionique) ;
K et L représentent indépendamment l'un de l'autre l'oxygène ou de plus le soufre ou NL*, où L* est l'hydrogène ou est un résidu sélectionné parmi un alkyle, en particulier un alkyle inférieur, un cycloalkyle, un cycloalkylalkyle, un aryle ou un aryl-alkyle inférieur, qui sont substitués ou non substitués ;
Y représente un alkylène non substitué ou substitué, un cycloalkylène non substitué ou substitué, un arylène, un hétéroarylène, un hétéroalkylène ou un radical divalent mixte non substitué ou substitué aliphatique/aromatique, aliphatique/alicyclique ou aliphatique/hétérocyclique ;
ou K et Y conjointement ou K seul représente(nt) un hétérocyclyle divalent lié par un azote ; et
D représente pour la fabrication de dérivés d'uréthane un hydroxy, et/ou représente pour la fabrication de dérivés d'urée (qui sont préférés) un amino primaire ou (en particulier) secondaire ;
ou D et Y conjointement, ou D, Y et K conjointement représentent un radical hétérocyclyle contenant N lié par un azote avec en plus de l'azote de liaison un azote existant dans le cycle sous la forme d'un groupe imino libre (-NH-) en tant qu'amino secondaire (pour les dérivés d'urée) ; où l'amino secondaire est de préférence un groupe de formule B
-N(-R)H (B)
dans laquelle
R représente un alkyle, en particulier un alkyle inférieur, surtout un alkyle inférieur α-ramifié, surtout l'isopropyle, l'isobutyle, le sec-butyle, le tert-butyle, un cycloalkyle, comme le cyclopropyle, le cyclobutyle, le cyclopentyle ou le cyclohexyle, un cycloalkylalkyle, en particulier le cyclohexylméthyle, un aryle, en particulier le phényle, ou un aryl-alkyle inférieur, en particulier un phénylalkyle inférieur, comme le benzyle, en particulier un alkyle inférieur ; et dans le cas du composant (B)
un ou plusieurs di- (de préférence) ou polyisocyanates, ou mélanges de ceux-ci ; et où de préférence un troisième composant (c), également séparé spatialement des deux composants (a) et (b), qui comprend un durcisseur, existe en plus ; et d'autres additifs et/ou réactifs peuvent exister dans les composants, en particulier dans le composant (a) des matières de charge et où des diluants de réactifs, dans le composant (b) des matières de charge, des diluants de réactifs, des accélérateurs et/ou des inhibiteurs, et dans le composant (c) des matières de charge.

4. Kit à plusieurs composants selon l'une des revendications 1 à 3, comprenant au moins deux composants séparés (a) et (b) qui comportent respectivement des précurseurs complémentaires de résines **caractérisées par** une teneur en dérivés d'uréthane et/ou d'urée durcissables, où les précurseurs complémentaires sont sélectionnés parmi, dans le cas du composant (a) un ou plusieurs composés de la formule (A) montrée dans la revendication 3, où R₁, R₂ et R₃ représentent indépendamment les uns des autres l'hydrogène ou un alkyle inférieur, en particulier de l'hydrogène ou le méthyle ;
K et L sont de l'oxygène ;
Y est un alkylène inférieur; et D est -OH (pour les dérivés d'uréthane) ou -N(R)H, où R représente un alkyle inférieur, surtout un alkyle inférieur α-ramifié, surtout l'isopropyle, l'isobutyle, le sec-butyle, le tert-butyle, ou est de plus -NH₂ ; dans le cas du
composant (b) un ou plusieurs di- ou poly-isocyanates, en particulier des di- ou poly-, surtout des di-, tri- ou tétra-isocyanates aliphatiques, cycloaliphatiques ou aromatiques ;
et où le troisième composant (c) également séparé spatialement des deux composants (a) et (b) existe en outre avec un durcisseur ; et d'autres additifs et/ou réactifs dans les composants peuvent exister, en particulier dans le composant (a) des matières de charge (sur la base du composant (a) de préférence jusqu'à 90 % en poids) et/ou des diluants de réactifs (sur la base du composant (a) de préférence jusqu'à 90 % en poids), dans le composant (b) des matières de charge (sur la base du composant (b) de préférence jusqu'à 90 en poids), des diluants de réactifs (sur la base du composant (a) de préférence jusqu'à 90 % en poids), des accélérateurs (sur la base du composant (b) de préférence jusqu'à 5 % en poids) et/ou des inhibiteurs (sur la base du composant (b) de préférence jusqu'à 2 % en poids) et dans le composant (c) des matières de charge (sur la base du composant (c) de préférence jusqu'à 90 % en poids).

5. Kit à plusieurs composants à trois composants selon l'une des revendications 1 à 4, dans lequel la masse des fractions du composant (a) forme 5 à 90, de préférence 20 à 80 % en poids, du composant (b) 5 à 90, en particulier 20 à 80, et du composant (c) (durcisseur) 0,1 à 30, en particulier 0,5 à 25 % en poids, sur la base de la masse totale des composants mélangeables.

6. Kit à plusieurs composants selon l'une des revendications 1 à 5, dans lequel le composant (a) comprend des composés de départ pour les dérivés d'uréthane qui portent un ou plusieurs autres groupes hydroxy, alors que le composant (b) comporte un ou plusieurs autres di- ou polyisocyanates, ou des mélanges de ceux-ci.

7. Mortier artificiel pouvant être obtenu après mélange des composants selon l'une des revendications 1 à 6 au niveau ou sur le lieu du site d'utilisation souhaité.

8. Utilisation d'un kit à plusieurs composants selon l'une des revendications 1 à 6 pour fabriquer des mortiers artificiels, comportant le mélange des composants correspondants, en particulier des composants (a), (b) et (c) sur le lieu du site d'utilisation souhaité, en particulier directement devant un trou ou au sein d'un trou dans lequel des moyens d'ancrage doivent être fixés, par exemple une forure.

9. Procédé de fixation de pièces d'ancrage dans des trous, qui comprend l'utilisation d'un kit à plusieurs composants selon l'une des revendications 1 à 6.

10. Procédé selon la revendication 9, dans lequel l'utilisation du kit à plusieurs composants sur le site d'utilisation souhaité se fait par mélange des composants (a), (b) et (c) sur le lieu du site d'utilisation souhaité et les pièces d'ancrage sont mises en place par enfoncement par frappe, rotation, enfoncement par poussée ou par combinaison de ceux-ci.
